(19) **Europäisches Patentamt**

**European Patent Office**

**Office européen des brevets**

(11) **EP 1 715 375 A1**

(12) **EUROPEAN PATENT APPLICATION**

(43) Date of publication:
**25.10.2006 Bulletin 2006/43**

(51) Int Cl.:
*G02F 1/139* (2006.01)

(21) Application number: **05290896.9**

(22) Date of filing: **22.04.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **Nemoptic**
**78114 Magny-Les-Hameaux (FR)**

(72) Inventors:
• **Joubert, Cécile**
**91400 Orsay (FR)**
• **Zenati, Zaccharia**
**93000 Bobigny (FR)**
• **Scheffer, Terry**
**Hilo, HI 96720-2234 (US)**

(74) Representative: **Texier, Christian et al**
**Cabinet Régimbeau**
**20, rue de Chazelles**
**75847 Paris cedex 17 (FR)**

(54) **Bistable twisted nematic (BTN) liquid crystal display device**

(57)    The application relates to a_bistable twisted nematic (BTN) liquid crystal display device comprising a liquid crystal layer (150) situated between first and second polarizers (100, 200), said layer (150) in the absence of an applied electric field having two stable, uniformly twisted textures, and at least one compensation layer (110, 190) positioned between said first and second polarizers (100, 200), said compensation layer (110, 190) being composed of at least one birefringent film, said birefringent film having an optical anisotropy defined by three characteristic refractive indices nx, ny, nz, with nx $\geq$ ny and nz being perpendicular to the plane of the cell substrates (120, 180) with biaxiality parameter Nz equal to (nx-nz)/(nx-ny), characterized in that Nz lies between - $\infty$ and 1 in order to compensate the birefringence of the bistable texture corresponding to the dark optical state in the case of oblique observation and thus improve the range of viewing angles to achieve a high contrast ratio and minimal color shift.

## FIG.17

| | |
|---|---|
| 100 → | **Analyser** |
| 110 → | **Compensation layer** |
| 150 → | **BTN cell** |
| 190 → | **Compensation layer** |
| 200 → | **Polarizer** |

EP 1 715 375 A1

**Description**

**FIELD AND OBJECT OF THE INVENTION**

The present invention concerns the field of liquid crystal displays (LCDs) and more specifically a method for improving the optical performance of bistable twisted nematic (BTN) liquid crystal displays when viewed at oblique angles.

**BACKGROUND OF THE INVENTION**

**Viewing angle problem of LCDs**

Nematic liquid crystal (LC) molecules form a uniaxial birefringent medium with the optical axis parallel to the director of the liquid crystal. Nearly all known nematic liquid crystals have positive optical anisotropy where the extraordinary refractive index is larger than the ordinary refractive index. The optical properties of LCDs are generally optimised for light passing perpendicularly to the cell substrates. For a light incident at an oblique angle θ, the birefringence of the liquid crystal will modify the state of light polarization in a different way than for light at normal incidence. This could cause, for example, an increased amount of light leakage in the dark state, degrading the contrast ratio at the oblique viewing angle. The color of the bright state of the display can also change depending of the oblique viewing angle. The variation of the optical performance of LCDs with viewing angle is an intrinsic problem of LCDs because of the birefringent nature of liquid crystals.

**Birefringent layers**

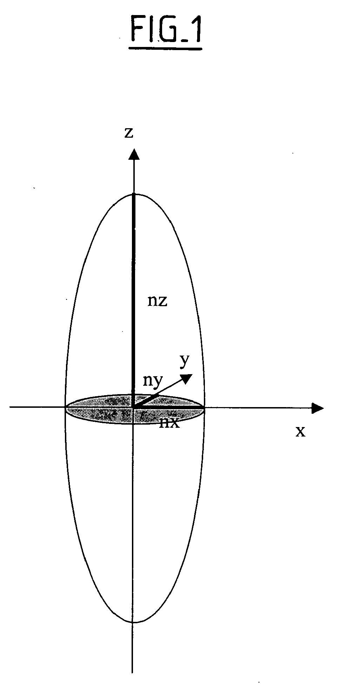

Much work has been done to improve the optical performance of LCDs at oblique viewing angles. This work has primarily focused on using external birefringent layers, known as compensation films, to cancel the birefringence of the LCD in the dark state when viewed at oblique angles. A birefringent medium is a medium having an anisotropy in refractive index. In the most general case the medium is biaxial and is fully described by the index ellipsoid (figure 1). Three different refractive indices (nx,ny,nz) along the three axes (x,y,z) of the ellipsoid define the optical properties of the medium.

When the biaxial media are realized, for example, by stretching plastic films, the z axis is perpendicular to the sheet and the x and y axes are in the plane of the sheet. If the two in-plane indices are equal, nx = ny, then the medium is uniaxial and the z axis is the optic axis which is perpendicular to the film plane. In this case the uniaxial film is called a

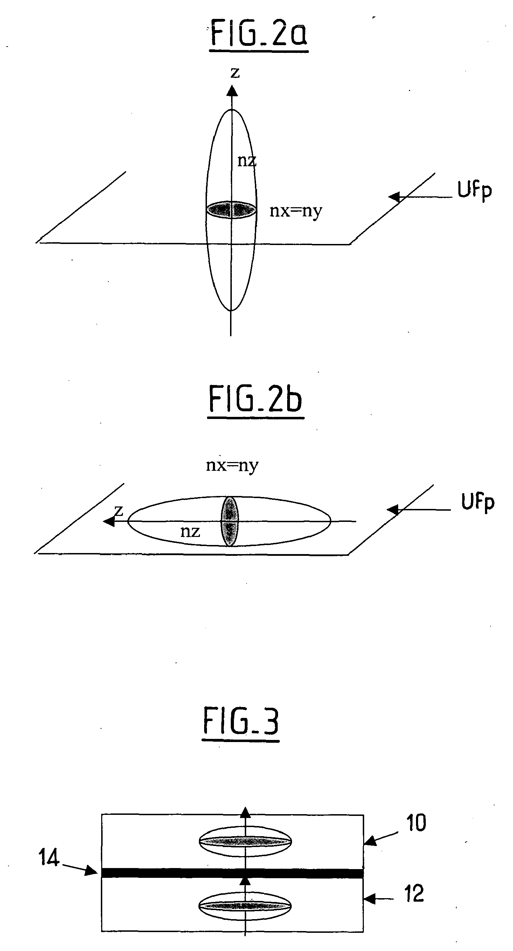

C plate. If either one of the in-plane indices (nx or ny) and the out-of-plane index nz are equal then the film is uniaxial and the optic axis is parallel to the film plane. In this case the uniaxial film is called an A plate. Such C plate and A plate are illustrated on figures 2 wherein uniaxial film plates are referenced Ufp. For nx and ny < nz the film is called positive, and for nx and ny>nz, the film is called negative.

A common way to characterize a biaxial medium is through the Nz parameter defined as Nz = (nx-nz)/(nx-ny) with nx > ny. Table 1 summarizes the different kinds of birefringent media and their associated Nz values.

Table 1: relationship between Nz and type of birefringent medium

| Nz | -∞ | | 0 | | 1 | | +∞ |
|---|---|---|---|---|---|---|---|
| | nz>nx=ny | nz>nx>ny | nx=nz>ny | nx>nz>ny | nx>ny=nz | nx>ny>nz | nx=ny>nz |
| | C+ | Biaxial + | A+ | | A- | Biaxial - | C- |

The optical retardation R for a uniaxial medium where, for example nx = ny = no, is defined as R = (nz-no)·d, where d is the thickness of the uniaxial film. Optical retardation is generally given in units of nanometers, or nm. A biaxial film is characterized by two retardation values, for example (nx-ny)·d and (nx-nz)·d .

Uniaxial A plates and C plates can also be composed of uniformly aligned liquid crystal molecules. Nematic liquid crystals are uniaxially positive and thus can form A+ or C+ plates depending upon whether the optic axis is oriented parallel or perpendicular to the substrate plane. Discotic liquid crystals are uniaxially negative and thus can form A- or C- plates depending upon whether the optic axis is oriented parallel or perpendicular to the substrate plane. These birefringent oriented liquid crystal layers could either be contained between two substrate plates or they could consist of polymerized liquid crystals forming a free-standing, oriented film of their own. Still other retardation films are known which can be generated by exposing certain types of photopolymers to polarized light which can be located on the inner surfaces of the substrate plates containing the active liquid crystal material. Still other retardation films are known which can be deposited on the substrate surfaces through a coating process (Lazarev et al. 1991 SID Digest of Technical Papers p 571-3).

Polarizing films currently available in the market are made of an oriented absorbing dye or iodine sheet laminated between two plastic carrier substrates.

Nearly all commercially available polarizers use Tri Acetyl Cellulose (TAC) as a carrier substrate which is known to be a film which is uniaxial or very slightly biaxial having a negative optical anisotropy (Han, Journal of the SID, 3/1,1995 p15). Figure 3 shows two TAC substrate C- plates 10 and 12 provided on either side of an absorbing/polarizing layer 14. The optic axis of a TAC film is perpendicular to the plane of the layer, so it is a negative C plate, with typical retardation of -40 nm to -55 nm. This type of polarizer is coated with a pressure sensitive adhesive (PSA) and is intended to be laminated on the outside of the substrate plates containing the liquid crystal material.

Other polarizing films are known which can be coated on inside of the substrate plates containing the liquid crystal material (Ohyama et al. 2004 SID Digest of Technical Papers p 1106-1109). In this case no TAC layer is present. If the polarizer is coated on the inside of the substrate plate it can be located either underneath the electrode or on top of the electrode.

The birefringent film can be glued on the polarizer substrate, but can also be integrated into the polarizer, meaning that the birefringent film becomes one of the substrate of the polarizer.

## Monostable TN displays

The most commonly used liquid crystal display mode is the 90° Twisted Nematic (TN) mode. In the absence of an applied electric field the liquid crystal molecules are parallel to the substrate plane and adopt a 90° twisted structure which rotates the plane of polarized light by 90°. When an electric field is applied, the molecules tilt out of the previous plane according to the field strength, and the layer untwists to a state which does not rotate the plane of polarized light. When such a layer is placed between two crossed polarizers, for example, the display transmission will vary according to the applied voltage. When the field is removed the liquid crystal layer returns to its original 90° twisted texture.

The TN display is an example of a monostable display, which means that if the electric power control is turned off, no image will be displayed and the screen will appear blank because the liquid crystal returns to its single, monostable texture. Monostable displays must be continuously updated in order to see the image, even if the image itself does not change. This is a disadvantage for displays designed for portable equipment since continuously updating the display requires a significant amount of power which puts undue strain on the battery lifetime.

The supertwisted nematic (STN) display is another type of a monostable TN liquid crystal display. It has a twist angle of approximately 240° in the absence of an electric field. Like the 90° TN display, the strength of an applied electric field controls the angle that the liquid crystal molecules tilt out of the plane.

## Compensating monostable TN displays to improve range of oblique viewing angles

In the publication Han, Journal of the SID, 3/1,1995 p15 it was noted that the negative optical anisotropy present in the TAC layers of commercial polarizing films actually improved the viewing angle characteristics of the TN display. To further improve the viewing angle characteristics of the TN display Mori proposed compensate the black, driven state of the display with compensation layers made of polymerised negative birefringent discotic liquid crystal molecules having a nonuniform, splayed optic axis orientation throughout the layer that mimics the liquid crystal director orientation near the boundaries of the driven TN cell (Mori IDW'96 p189 or Jpn. J. Appl. Phys. 36 1997 p143).

STN displays are generally compensated with uniaxially stretched polymer films. The primary purpose of these birefringent films is to remove the intrinsic STN coloration and make it possible for the pixels to switch from black to white - a prerequisite if a full color display is to be realized using color mosaic filters. The compensation films also improve the range of viewing angles, but the range is never as wide as with the compensated TN displays.

## Bistable TN displays

Another class of nematic LCDs are those that exhibit bistable, multistable or metastable behavior. In this class, the liquid crystal layer can assume at least two distinct textures that are either stable or metastable in the absence of an applied electric field. To switch between the two textures, suitable electronic signals are applied to electrodes that are positioned on each side of the liquid crystal layer. Once a particular texture is created, it persists in the absence of an applied electric field thanks to its bistability. The ability of bistable LCDs to store images in the absence of an applied electric field means that the display does not need to be continuously updated at a high rate if the displayed information does not change. This dramatically reduces the power consumption of the display and makes bistable displays attractive for portable devices where battery lifetime is of paramount importance.

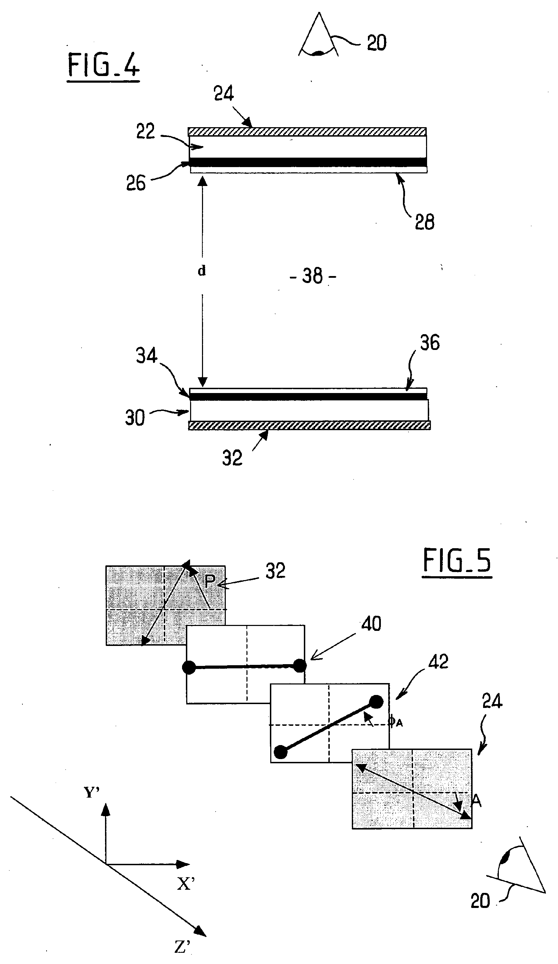

In bistable TN displays the two textures consist of uniformly twisted, planar nematic structures, each having a different twist angle. The basic cell structure of a bistable twisted nematic (BTN) LCD is shown in figure 4. The cell comprises a layer 38 of chiral nematic liquid crystal, having a uniform twist, between two substrate plates - a rear substrate 30 which faces either a backlight or a reflector and a front substrate 22 which faces the viewer 20. Electrodes 26, 34 positioned on the substrates 22, 30 allow electrical command signals to be applied to the chiral nematic liquid crystal 38 situated between them. Alignment layers 28, 36 deposited on the electrodes 26, 34 orient the liquid crystal molecules 38 at the two boundary surfaces to give the desired twist angles for the two bistable textures. Two polarizers 24, 32 situated on each side of the cell make it possible to obtain a bright optical state and a dark optical state, each state being associated with one or the other of the two bistable textures. The polarizers 24, 32 are generally situated external to the LC cell, but one or both polarizers could also be situated inside the LC cell. The front polarizer 24, situated on the observer side 20 of the cell is also referred to as the analyzer. If the display were designed for color, then color filters (not shown) would also be present on the inside of one of the substrates 22, 30.

On figure 4, the layer thickness of the chiral nematic liquid crystal or cell gap is referenced "d".

It is possible to operate BTN displays in three different optical modes, depending on the type of rear polarizer 32 chosen, with the front polarizer 24 being always of the transmissive type. A transmissive mode is obtained if the rear polarizer 32 is also a transmissive type. For this mode a backlight is necessary at the rear of the cell to provide illumination to the observer. A reflective mode is obtained if the rear polarizer 32 is a reflective type. In this case the display is illuminated by ambient light and reflected by the rear polarizer 32 back to the observer. A transflective mode is obtained if the rear polarizer 32 is a transflective type, which is partially transmitting and partially reflecting. In this mode the display can operate either in a transmissive mode with a backlight, or in a reflective mode with ambient light.

The optical parameters of a BTN liquid crystal cell are (figure 5):

- the layer retardation $\Delta n \cdot d$ defined as the product of the liquid crystal birefringence $\Delta n$ and the cell gap d,
- the angles $\phi_P$ and $\phi_A$ of the liquid crystal directors 40, 42 respectively at the rear and front side in the x'y'z' coordinate system. By convention we take x' parallel to the rear side LC director 40, which makes $\phi_P = 0$
- the angles P and A that the absorption axes of the rear and front polarizers 32, 24 make with the x' axis.

Two types of Bistable Twisted Nematic (BTN) displays have been developed that each have two uniformly twisted textures in the absence of an applied field. These two types are known as $\pi$BTN displays and $2\pi$BTN displays. They will be described in further detail below.

## $\pi$BTN display called BiNem display

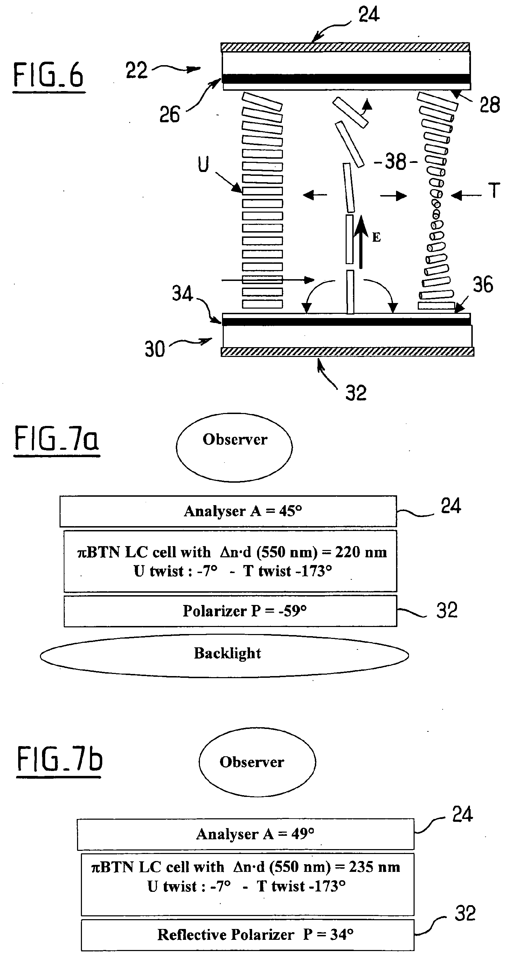

The $\pi$BTN display, also called the BiNem display, has been proposed by Dozov (US 6,327,017). The two stable states of the BiNem display are uniformly twisted nematic textures which, for the case of strong azimuthal anchoring, differ in total twist angle by 180°, hence the name $\pi$BTN. Because the two textures are topologically inequivalent, a breaking of the anchoring on one of the surface alignment layers is necessary to switch from one texture to the other (see figure 6). This breaking of the anchoring in the BiNem display is obtained by applying an electric field perpendicular to the substrates. Kwok (US 6,784,955) describes a $\pi$BTN embodiment where the two textures are switched by an electric field having two components, one parallel and one perpendicular to the substrates.

On figure 6 anchoring breaking of the LC molecules is illustrated on the side of a weak anchoring orientation layer 36, the other orientation layer 28 having strong anchoring properties. On the same figure 6, the electrodes in ITO are referenced 26, 34.

The low twisted texture (twist $\phi_U$) is called the U texture and the high twisted texture (twist $\phi_T \approx \phi_U \pm \pi$) is called the T texture. In order to equalize the energy of the two textures, the d/p ratio is given by d/p $\approx 0.25 + \phi_U/2\pi$, where d is the liquid crystal layer thickness or cell gap and p is the intrinsic pitch of the chiral nematic liquid crystal.

Optimized optical modes for $\pi$BTN displays having both high brightness and high contrast ratio for normal incidence viewing have been proposed by Kwok (US 6,784,955) and Joubert (FR0313991 and FR0313992). These optimized modes have certain layer twist angles, polarizer angles and liquid crystal layer retardations. These modes are optimized for normal incidence viewing.

## intrinsic viewing angle performance

Joubert proposes optimised configurations in terms of birefringence, retardation and polarizer angles for a BiNem cell with two polarizers, for both transmissive and reflective modes. One example of each mode is described by the optical stacks shown in figure 7 (7a transmissive and 7b reflective). The layer twist angles for the U and T states are -7° and -173°. The difference between the two twist angles is 166° rather than 180° because one of the surfaces is assumed to have weak azimuthal anchoring with 7° azimuthal slippage in either direction. The angles are defined in figure 5. One or both of the polarizers can be either laminated onto the LCD glass substrates or coated on the inside of the LC cell.

Figure 7a shows a cell, provided between a backlight and an observer, comprising an analyser 24 with A = 45° and a polarizer 32 with P = - 59° on both sides of a πBTN liquid crystal corresponding to a retardation Δn·d (550 nm) = 220 nm, a U twist = - 7° and a T twist = - 173°.

Figure 7b shows a cell, provided in front of an observer, which comprises an analyser 24 with A = 49° and a reflective polarizer 32 with P = 34° on both sides of a πBTN liquid crystal corresponding to a retardation Δn·d (550 nm) = 235 nm, a U twist = - 7° and a T twist = - 173°.

The contrast ratio and color shift characteristics for oblique viewing of the display are conveniently represented on conoscopic diagrams which indicate the values over the entire viewing hemisphere in the form of isolines. These diagrams are routinely generated by state-of-the-art LCD simulation software and LCD optical characterization instruments.

For contrast ratio, isolines of equal contrast are plotted. For color shift, isolines of equal chromaticity difference ΔC are plotted where the reference color is the normal incidence color. One unit of ΔC can be considered to be a just noticeable color difference. ΔC is defined by:

$$\Delta C = \sqrt{\left(u_2^* - u_1^*\right)^2 - \left(v_2^* - v_1^*\right)^2} \; ,$$

where the subscript 1 refers to the u* and v* color coordinates at normal incidence and the subscript 2 refers to those coordinates at other oblique angles of incidence. u* and v* are defined by:

$$u^* = 13 L^* \left(u' - u'_n\right)$$

$$v^* = 13 L^* \left(v' - v'_n\right)$$

$$L^* = 116 \left[\frac{Y}{Y_n}\right]^{1/3} - 16$$

where the subscript n refers to the value corresponding to nominally white light. As usual

$$u' = \frac{4X}{X + 15Y + 3Z} \quad \text{and} \quad v' = \frac{9Y}{X + 15Y + 3Z}$$

where X, Y and Z are the tristimulus values.

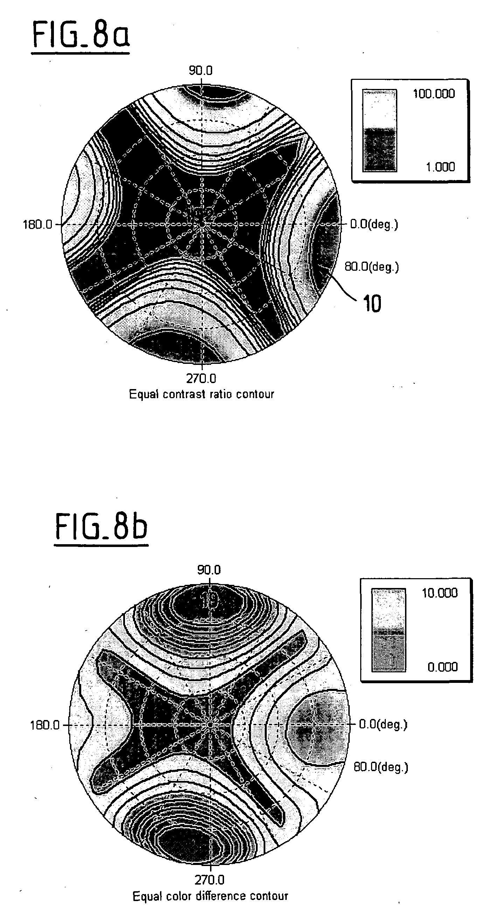

Figure 8 shows contrast ratio (8a) and color shift (8b) for the example of the transmissive configuration illustrated in figure 7a. On figure 8a iso-contrast ratio contours from center outward : 80, 70, 60, 50, 40, 30, 20 and 10. On figure 8b iso-color difference contours ΔC from center outward : 2, 4, 6, 8, 10, 12, 14 et 16. It can be seen from figure 8 that the isoline for a contrast ratio of 10 extends in to a polar angle of about 65° (figure 8a) with maximum color shift of 19 (figure 8b). This restricted range of viewing angles for a minimum 10:1 contrast ratio is adequate, but leaves room for improvement. It would also be desirable to reduce the amount of color shift over this range.

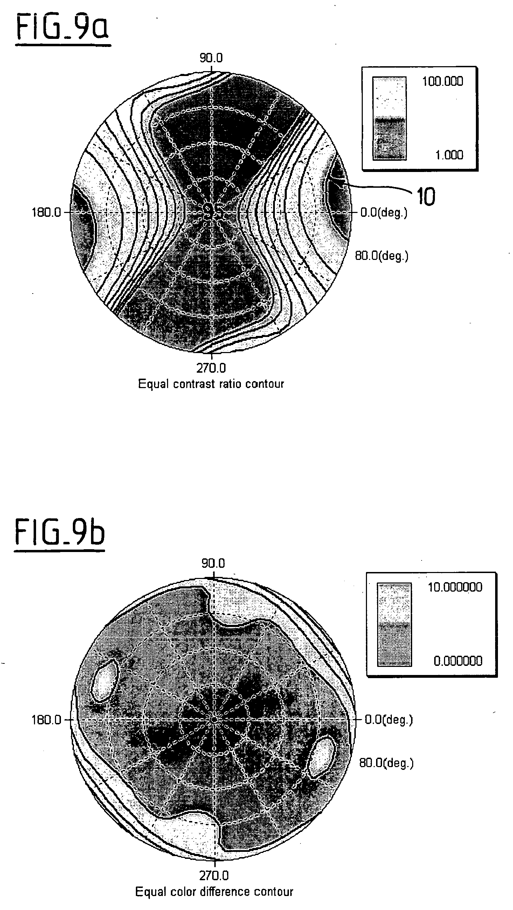

Figure 9 shows contrast ratio (9a) and color shift (9b) for the example of the reflective configuration illustrated in figure 7b. On figure 9a iso-contrast ratio contours from center outward : 80, 70, 60, 50, 40, 30, 20 and 10. On figure 9b iso-color difference contours ΔC from center outward : 2, 4, 6, 8, 10, 12, 14 et 16. It can be seen from figure 9 that the isolines for a contrast of 10 extends in to a polar angle of about 65° (figure 9a) with a very small color shift having a maximum value of around 4 (figure 9b). This restricted range of viewing angles for a minimum 10:1 contrast ratio is adequate, but leaves room for improvement.

influence of TAC substrates

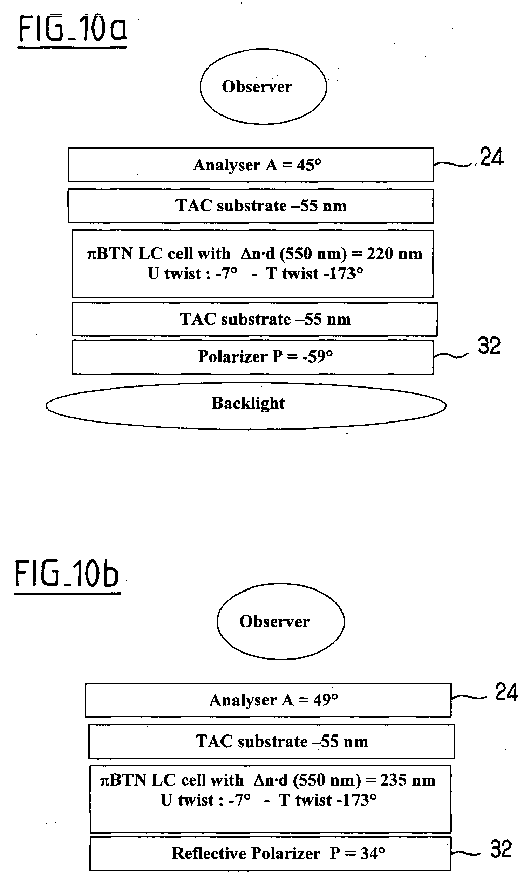

As explained earlier, the commercially available polarizers which are laminated onto the display have birefringent TAC carrier films on both sides, but only the TAC film between the LC layer and the polarizer sheet will influence the optical performance and need to be taken into consideration. Thus for the transmissive mode and for the reflective mode where a reflector is simply placed behind the rear polarizer, the influence of only two TAC films need be considered. But if the reflective polarizer is based on Bragg reflection then only the TAC layer of the front polarizer needs to be taken into account since no TAC layer is present on the reflective polarizer. In the simulations to follow, only one TAC film will be considered for the reflective mode. The corresponding optical stacks, taking into account the TAC substrates, are illustrated on figure 10 (figure 10a for transmissive, figure 10b for reflective). A typical value of a TAC birefringence of -55nm is chosen here as an example.

Figure 10a shows a cell, provided between a backlight and an observer, comprising a stack including an analyser 24 with A = 45°, a TAC substrate - 55 nm, a $\pi$BTN liquid crystal corresponding to a retardation $\Delta n \cdot d$ (550 nm) = 220 nm, a U twist = - 7° and a T twist = - 173°, a TAC substrate - 55 nm and a polarizer 32 with P = - 59°.

Figure 10b shows a cell, provided in front of an observer, which comprises a stack including an analyser 24 with A = 49°, a TAC substrate - 55 nm, a $\pi$BTN liquid crystal corresponding to a retardation $\Delta n \cdot d$ (550 nm) = 235 nm, a U twist = - 7° and a T twist = - 173° and a reflective polarizer 32 with P = 34°.

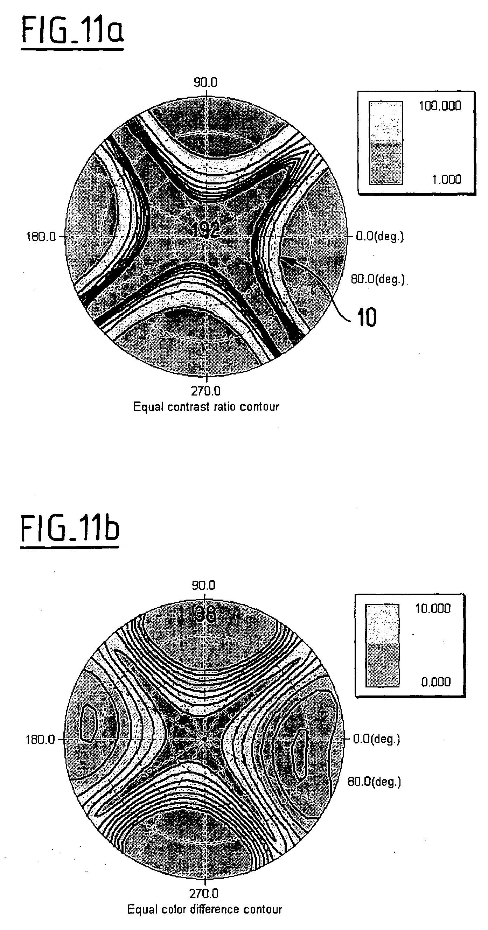

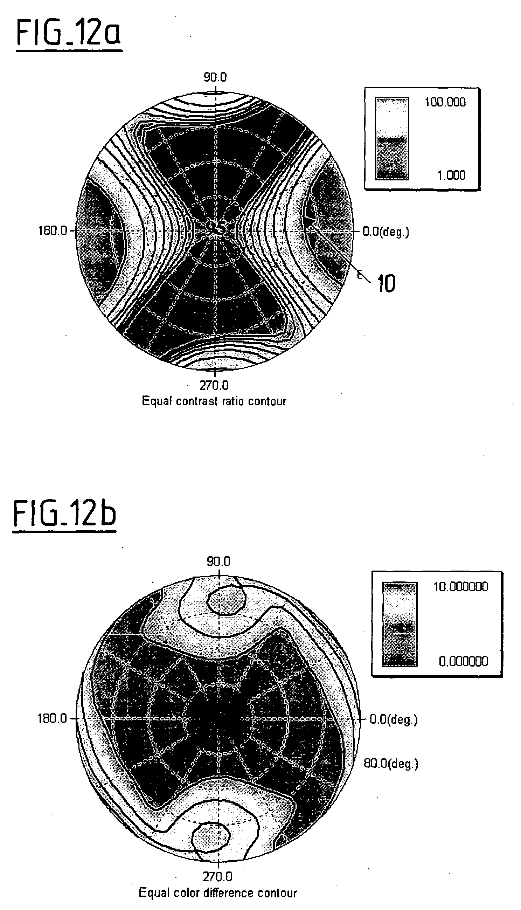

Figures 11 and 12 shows respectively the computed optical characteristics of transmissive and reflective modes corresponding to the stack examples of figure 10a and 10b. It can be seen from figure 11 that the TAC substrate degrades the optical characteristics in terms of contrast (isocontrast 10 at 45°) and color shift (maximum is 38) compared to the intrinsic performance computed without TAC substrates. Similar results are obtained for reflective mode (figure 12), but here the TAC layer only degrades the contrast, with the color shift still remaining relatively low. This is quite the opposite case to the TN displays (Han, Journal of the SID, 3/1,1995 p 15) where the TAC films actually improved the viewing angle characteristics. On figures 11 and 12, iso-contrast ratio contours and iso-color difference contours are the same as for figures 8 and 9.

**2$\pi$BTN display called Berreman display**

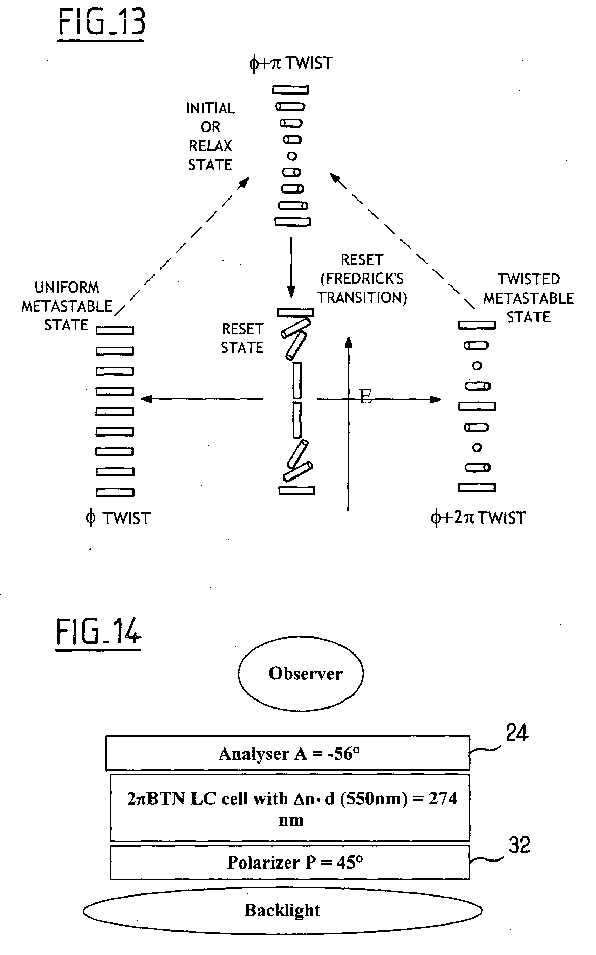

The 2$\pi$BTN display was first introduced by Berreman (US 4,239,345) and later by Tanaka (US 5,900,852). The twist angle of the initial texture is $\phi + \pi$, and after a reset pulse, two metastable textures can be obtained having respectively $\phi$ and $\phi + 2\pi$ twist for the case of strong azimuthal anchoring of the director at the substrate surfaces. The total twist angles of the two metastable textures thus differ by $2\pi$ (see figure 13). Switching between the two metastable textures is accomplished by applying an electric field perpendicular to the plane of the substrates. From various studies, it is known that the d/p ratio to achieve bistability in a 2$\pi$BTN display is given by d/p $\approx 0.5 + \phi/2\pi$.

intrinsic viewing angle performance

Optimized optical modes for 2$\pi$BTN displays having both high brightness and high contrast ratio for normal incidence viewing have been proposed by Kwok in US patent US 6,707,527 where he proposes some optical modes for transmissive 2$\pi$BTN displays in terms of $\Delta n \cdot d$, twist angles and polarizer angles. One of these modes is illustrated on figure 14.

Figure 14 shows a cell, provided between a backlight and an observer, comprising a stack including an analyser 24 with A = - 56°, a $\pi$BTN liquid crystal corresponding to a retardation $\Delta n \cdot d$ (550 nm) = 274 nm, a and a polarizer 32 with P = 45°.

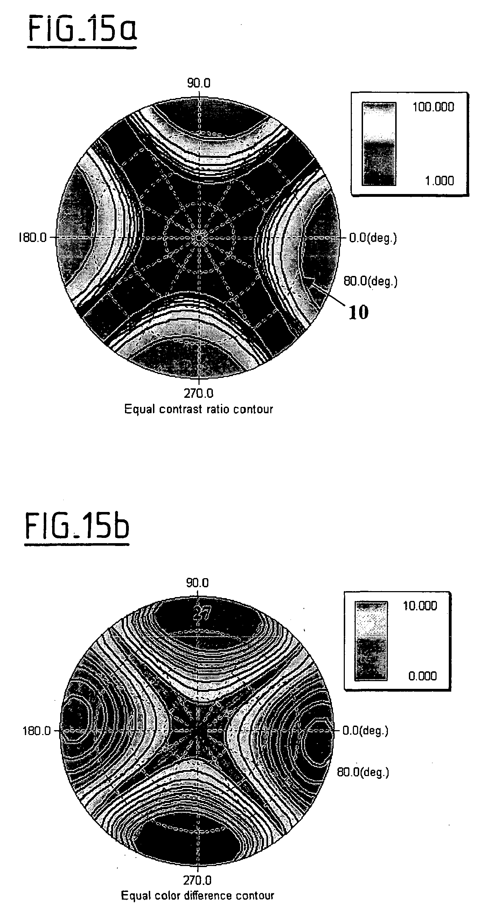

The corresponding optical performance is presented in figure 15. Similar to the $\pi$BTN case, the 2$\pi$BTN modes are optimized for normal incidence viewing. When viewed at oblique angles of incidence the optical performance also falls off sharply

influence of TAC substrates

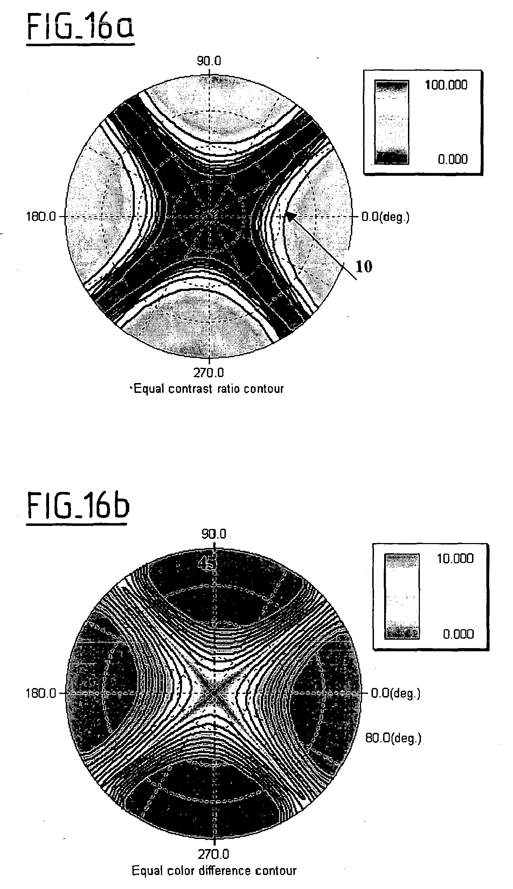

By taking into account the two TAC layers in the same way that was described for the $\pi$BTN display of figure 10a, the resulting optical performance also is similarly degraded compared to the intrinsic conoscopic diagram (figure 15). From figure 16a it can be seen, for example, that the isoline for a contrast of 10 extends in to a polar angle of about 40° compared to 60° for the intrinsic case without the TAC substrates (figure 15a) and that the color shift is highly degraded increasing to 45 (figure 16b) from 27 for the case without TAC (figure 15b).

Of course the phenomenon for the 2$\pi$BTN reflective mode with two polarizers is similar to the case for the $\pi$BTN reflective mode with two polarizers.

**SUMMARY OF THE INVENTION**

The object of the present invention is to obtain a BTN liquid crystal display with high contrast ratio and minimal color shift over a wide range of oblique viewing angles.

After long analysis, the inventors have determined that this object may be achieved by the addition of one or more special compensation layers.

BTN displays with conventional birefringent retarders are known, but the retarders have not been optimized with the intent of improving the viewing angle. Kwok, for example, (Journal of Applied Optics vol. 88 No. 4 p1718) published adding a quarter wave positive A plate to the reflector side of a $2\pi$BTN display cell so that it would operate in the reflective mode with high contrast using a single polarizer. Similarly, Guo (Applied Optics vol 42 No. 19 p3853) proposed using several half wave A plates situated on the observer side of a $2\pi$BTN display cell to obtain a high contrast, single-polarizer reflective display. The goal of these compensations was to improve the contrast ratio and reflectivity for observation at normal incidence. No attempt was made to optimize for high contrast ratio or reduced color shift at oblique viewing angles. Guo only showed that the viewing-angle properties of his compensation scheme designed for normal incidence remains almost unchanged compared to the case without compensation. Osterman (IDW '02, p101-103) proposed placing a simple uniaxial quarter-wave retardation film either inside or outside a reflective BTN display. The object of this work was to optimize a single-polarizer BTN display for high contrast ratio and high brightness at normal incidence viewing. As with the other publications mentioned above, no attempt was made to optimize the retarder for high contrast ratio or reduced color shift at oblique viewing angles.

As shown in figures 11-12 and 15-16, the range of viewing angles which have a high contrast and minimal color shift is rather limited for many of the BTN embodiments. In fact, unlike the monostable TN display, the acceptable viewing angle range is further restricted by the TAC layers present on the commercial polarizer films. The uniformly twisted bistable textures of the BTN displays are quite different from the texture of the driven TN state, and therefore have quite different optical properties for obliquely incident light. For this reason birefringent compensation layers optimized to improve contrast ratio and reduce color shift at oblique viewing angles for TN displays would not be suitable for BTN displays.

The present invention proposes to improve the off-axis optical performance of BTN displays that use two polarizers by positioning at least one new compensation layer between the two display polarizers .

More precisely the present invention proposes a bistable twisted nematic (BTN) liquid crystal display comprising a liquid crystal layer situated between first and second polarizers, said layer in the absence of an applied electric field having two stable, uniformly twisted textures, and at least one compensation layer positioned between said first and second polarizers, said compensation layer being composed of at least one birefringent film or retarder, said birefringent film having an optical anisotropy defined by three characteristic refractive indices nx, ny, nz, with nx $\geq$ ny and nz being perpendicular to the plane of the cell substrates with biaxiality parameter Nz equal to (nx-nz)/(nx-ny), characterized in that Nz lies between $-\infty$ and 1 in order to compensate the birefringence of the bistable texture corresponding to the dark optical state in the case of oblique observation and thus improve the range of viewing angles to achieve a high contrast ratio and minimal color shift.

Each retarder or birefringent film is thus either a uniaxial positive C plate (nz > nx = ny with Nz = $-\infty$), a uniaxial positive A plate (nx=nz>ny with Nz=0) or a biaxial positive plate having either nz > nx > ny (Nz < 0) or nx > nz > ny (0 < Nz < 1).

Various embodiments of the invention are proposed. In accordance with the present invention, the compensation layer could consist of a single retarder of the desired retardation or it could consist of a plurality of retarders laminated together whose total retardation when added together equals the desired retardation. The retarders composing the compensation layer could also be of different types, such as for example a combination of an A+ plate and a C+ plate.

According to alternative features of the invention:

- the switch between the two textures is obtained by applying an electric field having at least one component perpendicular to the plane of the liquid crystal cell substrates.

- the twists of the two stable textures differ by an angle being equal mainly to a multiple of $\pi$ smaller or equal to $2\pi$.

- the birefringent film is realised by stretching plastic films.

- the birefringent film is realised with polymerised liquid crystal molecules.

- the birefringent film is realised with polymerised nematic liquid crystal molecules.

- the birefringent film is generated by exposing photopolymers to polarized light .

- the birefringent film is deposited on the substrate surfaces through a coating process.

- the birefringent film is part of the polarizer.

- the twists of the two stable textures differ by an angle being mainly equal to $\pi$.

- the d/p ratio is d/p $\approx$0.25 + $\phi/2\pi$, $\phi$ being the twist of the lower twisted texture.

- the twists of the two stable textures differ by an angle being mainly equal to $2\pi$.

- the d/p ratio is d/p $\approx$0.5 + $\phi/2\pi$, $\phi$ being the twist of the lower twisted texture.

The present invention relates also to a process of manufacturing a bistable twisted nematic (BTN) liquid crystal display, wherein said process comprising the steps of providing a liquid crystal layer situated between first and second polarizers, said layer in the absence of an applied electric field having two stable, uniformly twisted textures, and providing at least one compensation layer positioned between said first and second polarizers, said compensation layer being composed of at least one birefringent film or retarder, said birefringent film having an optical anisotropy defined by three characteristic refractive indices nx, ny, nz, with nx $\geq$ ny and nz being perpendicular to the plane of the cell substrates with biaxiality parameter Nz equal to (nx-nz)/(nx-ny), said process being characterized in that Nz lies between - $\infty$ and 1 in order to compensate the birefringence of the bistable texture corresponding to the dark optical state in the case of oblique observation and thus improve the range of viewing angles to achieve a high contrast ratio and minimal color shift.
Other features and advantages of the present invention are disclosed in the following detailed description as well on the enclosed drawings.

## BRIEF DESCRIPTION OF THE DRAWINGS

Figure 1 illustrates the refractive index ellipsoid of a biaxial medium according to the state of the art.

Figure 2a illustrates a C+ plate uniaxial film according to the state of the art and figure 2b illustrates a A+ plate uniaxial film according to the state of the art.

Figure 3 illustrates the architecture of commercially available polarizers according to the state of the art.

Figure 4 illustrates a BTN cell structure according to the state of the art.

Figure 5 illustrates the definition of x'y'z' coordinate system and main optical parameters of such a BTN cell structure according to the state of the art.

Figure 6 illustrates of the principle of a $\pi$BTN display according to the state of the art.

Figure 7 illustrates an example of an optical stack for a $\pi$BTN display according to the state of the art. More precisely figure 7a illustrates a transmissive $\pi$BTN display and figure 7b illustrates a reflective $\pi$BTN display.

Figure 8 illustrates optical performance of $\pi$BTN transmissive configuration according to the state of the art, showed in figure 7a. More precisely, figure 8a illustrates the contrast conoscopic diagram, while figure 8b illustrates the color shift conoscopic diagram.

Figure 9 illustrates optical performance of the $\pi$BTN reflective configuration according to the state of the art, showed in figure 7b. More precisely, figure 9a illustrates the contrast conoscopic diagram, while figure 9b illustrates the color shift conoscopic diagram.

Figure 10 illustrates examples of an optical stack according to the state of the art, taking into account the TAC substrate of commercially available polarizers. More precisely, figure 10a illustrates a transmissive $\pi$BTN display, while figure 10b illustrates a reflective $\pi$BTN display (example of only one polarizer with TAC substrate.

Figure 11 illustrates optical performance of $\pi$BTN transmissive configuration according to the state of the art, including two TAC polarizer substrates as illustrated in figure 10a. More precisely figure 11a illustrates contrast conoscopic diagram, while figure 11b illustrates color shift conoscopic diagram.

Figure 12 illustrates optical performance of πBTN reflective configuration according to the state of the art, including one TAC polarizer substrate as illustrated in figure 10b. More precisely figure 12a illustrates contrast conoscopic diagram, while figure 12b illustrates color shift conoscopic diagram.

Figure 13 illustrates the principle of a 2πBTN display according to the state of the art.

Figure 14 illustrates the example of an optical stack for a transmissive 2πBTN display according to the state of the art.

Figure 15 illustrates optical performance of the 2πBTN transmissive configuration according to the state of the art, illustrated in figure 14. More precisely, figure 15a illustrates the contrast conoscopic diagram, while figure 15b illustrates color shift conoscopic diagram.

Figure 16 illustrates optical performance of 2πBTN transmissive configuration according to the state of the art, including two TAC polarizer substrates as illustrated in figure 10b. More precisely figure 16a illustrates contrast conoscopic diagram, while figure 16 illustrates color shift conoscopic diagram.

Figure 17 illustrates the principle of the invention.

Figure 18 illustrates a first embodiment of the invention.

Figure 19 illustrates a first variant of the first embodiment of the invention.

Figure 20 illustrates a second variant of the first embodiment of the invention.

Figure 21 illustrates the principle of a second embodiment of the invention.

Figure 22 illustrates an example of the second embodiment of the invention.

Figure 23 illustrates a first variant of the second embodiment of the invention.

Figure 24 illustrates a second variant of the second embodiment of the invention.

Figure 25 illustrates optical performance of compensated πBTN transmissive configuration of the invention including two TAC polarizer substrates, by using two positive uniaxial films on each side of the LC cell as described in table 2. More precisely, figure 25a illustrates contrast conoscopic diagram, while figure 25b illustrates color shift conoscopic diagram.

Figure 26 illustrates optical performance of compensated πBTN transmissive configuration of the invention including two TAC polarizer substrates, by using one positive uniaxial film as described in table 3. More precisely, figure 26a illustrates contrast conoscopic diagram, while figure 26b illustrates color shift conoscopic diagram.

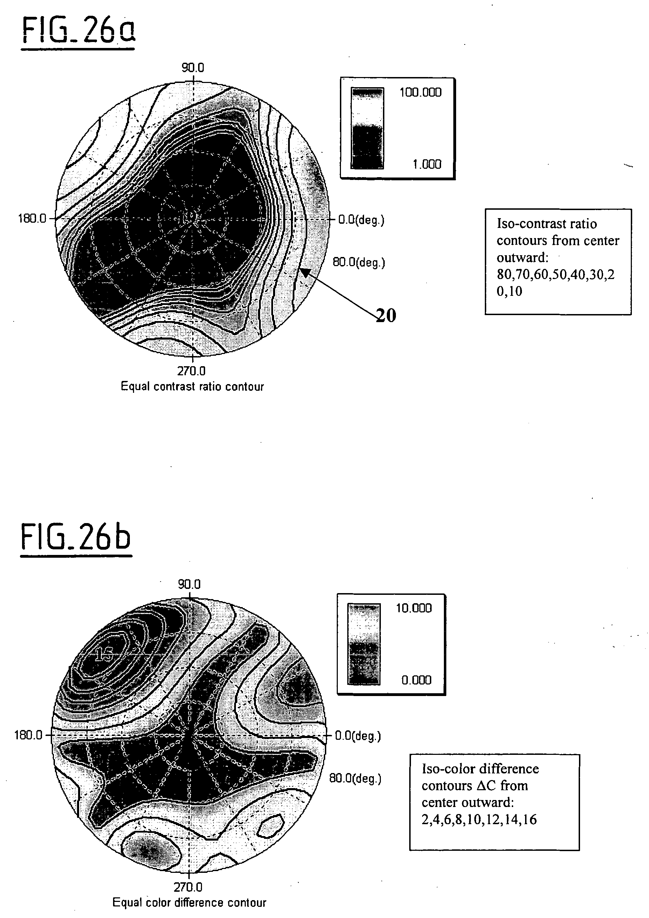

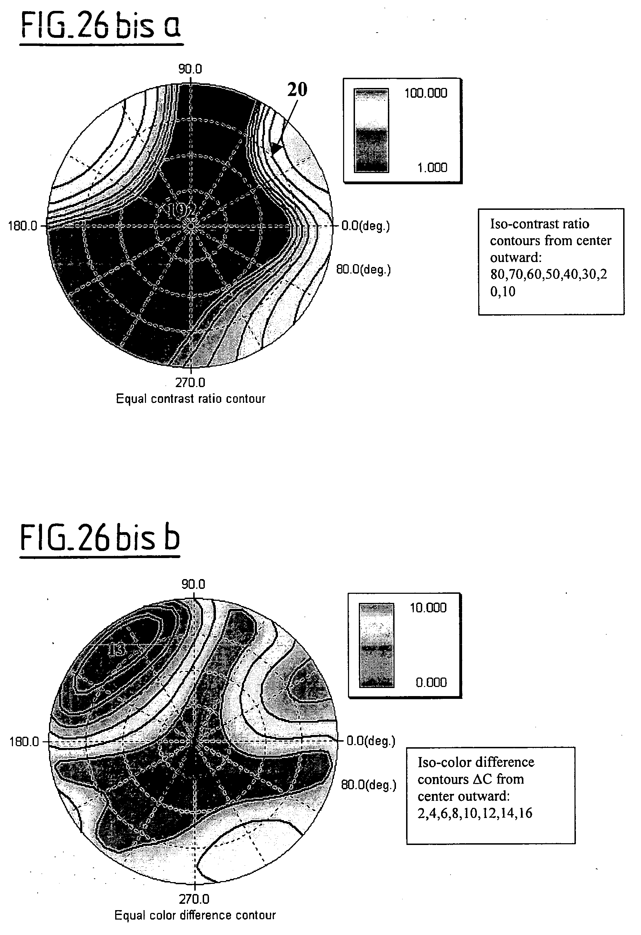

Figure 26bis illustrates optical performance of compensated πBTN transmissive configuration of the invention including two TAC polarizer substrates by using a combination of one positive C plate and one positive A plate as described in table 3bis. More precisely figure 26bisa illustrates contrast conoscopic diagram, while figure 26bisb illustrates color shift conoscopic diagram.

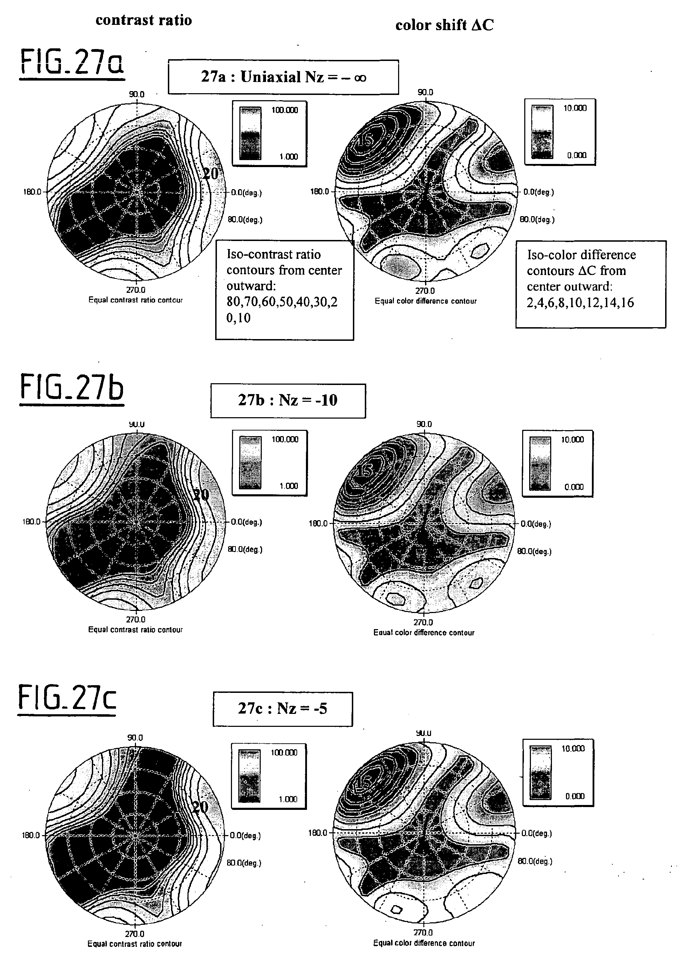

Figure 27 illustrates optical performance of compensated πBTN transmissive configuration of the invention including two TAC polarizer substrates by using one biaxial film as described in table 4. More precisely figure 27a illustrates the case of Nz = - ∞; figure 27b illustrates the case of Nz = -10 and figure 27c illustrates the case of Nz = -5.

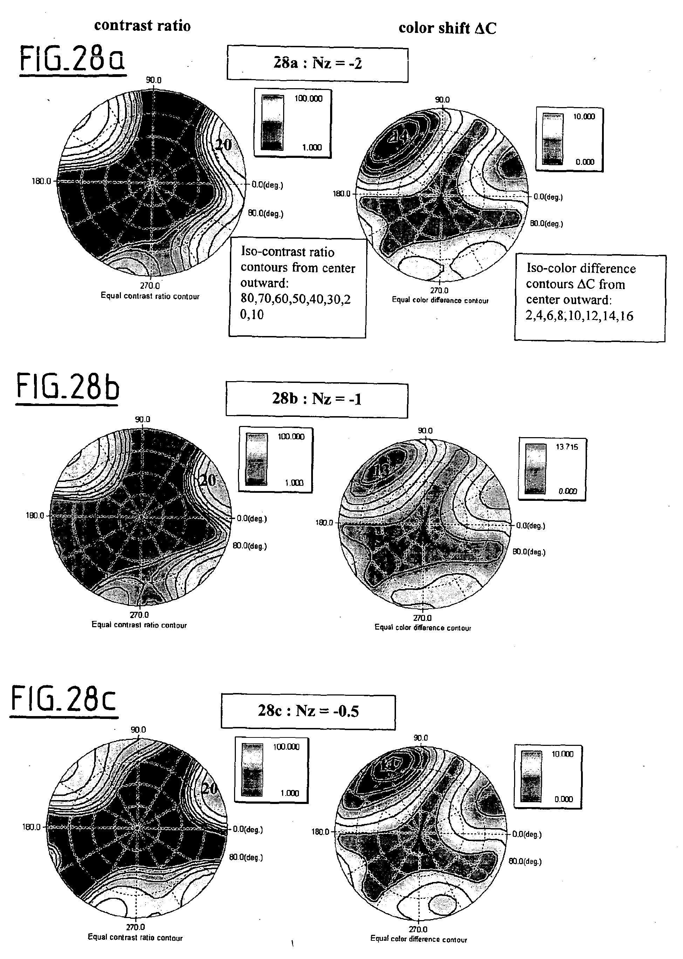

Figure 28 illustrates optical performance of compensated πBTN transmissive configuration of the invention including two TAC polarizer substrates by using one biaxial film as described in table 4. More precisely figure 28a illustrates the case of Nz = -2; figure 28b illustrates the case of Nz = -1 and figure 28c illustrates the case of Nz = -0.5.

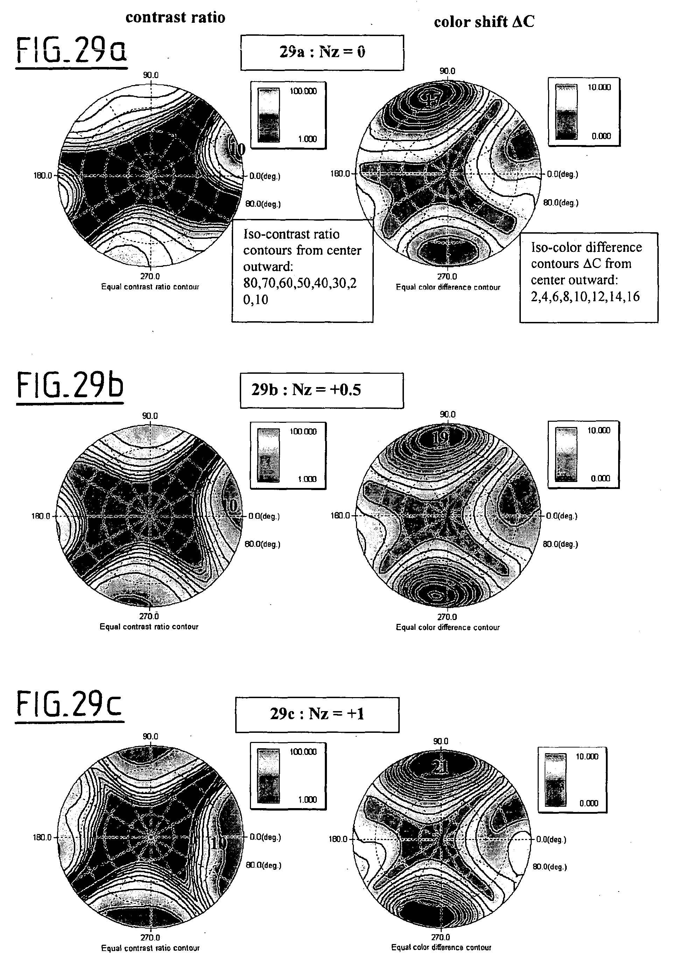

Figure 29 illustrates optical performance of compensated πBTN transmissive configurations of the invention including two TAC polarizer substrates by using one biaxial film as described in table 4. More precisely figure 29a illustrates the case of Nz = 0; figure 29b illustrates the case of Nz = 0.5 and figure 29c illustrates the case of Nz = 1.

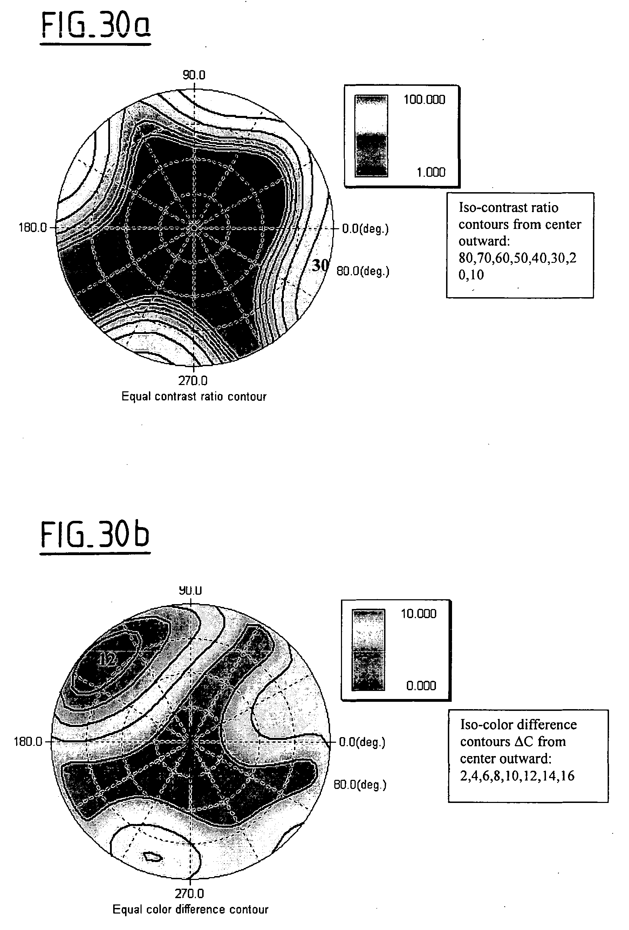

Figure 30 illustrates optical performance of compensated πBTN transmissive configuration of the invention by using one uniaxial film as described in table 6. More precisely figure 30a illustrates contrast conoscopic diagram, while figure 30b illustrates color shift conoscopic diagram.

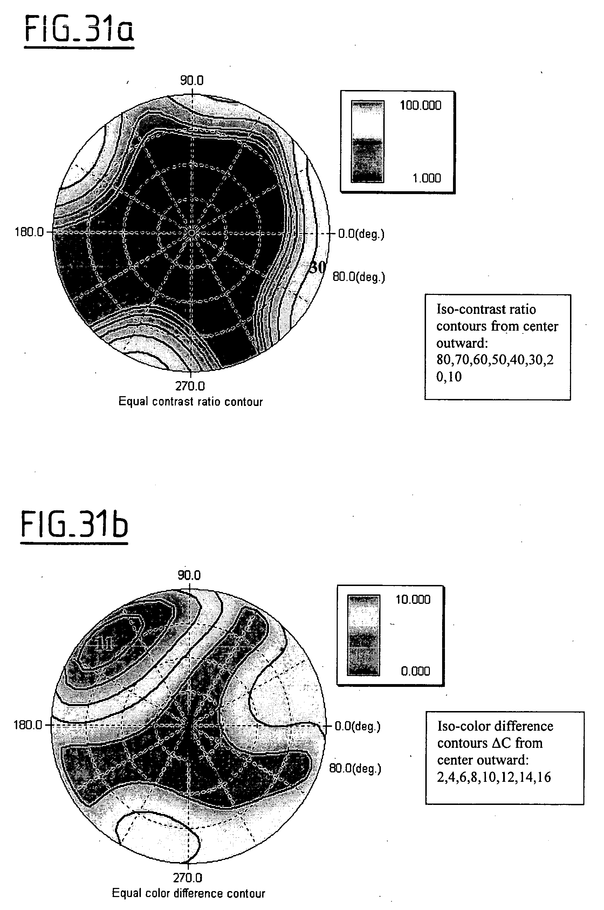

Figure 31 illustrates optical performance of compensated πBTN transmissive configuration of the invention by using one biaxial film as described in table 7. More precisely figure 31a illustrates contrast conoscopic diagram, while figure 31b illustrates color shift conoscopic diagram.

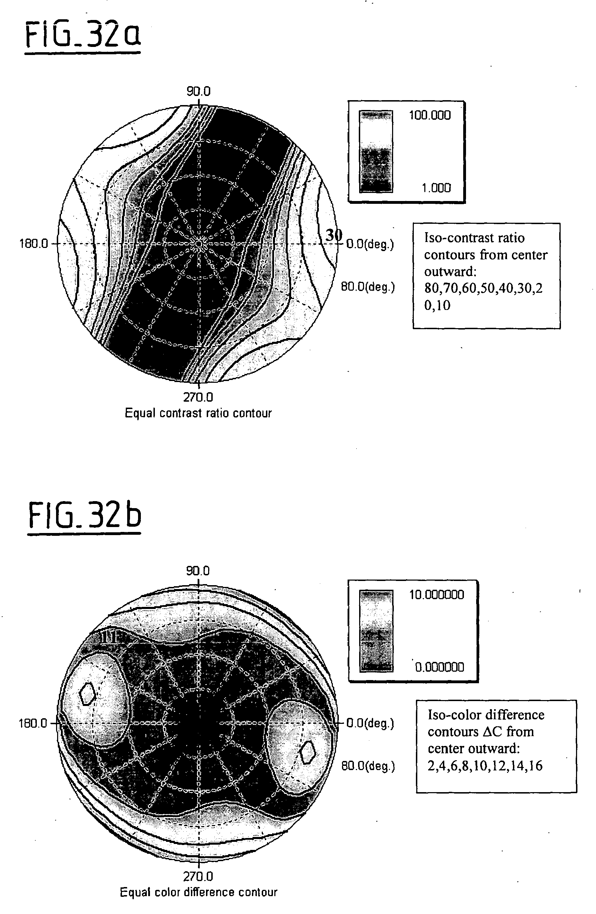

Figure 32 illustrates optical performance of compensated πBTN reflective configuration of the invention by using one uniaxial film as described in table 8. More precisely figure 32a illustrates contrast conoscopic diagram, while figure 32b illustrates color shift conoscopic diagram.

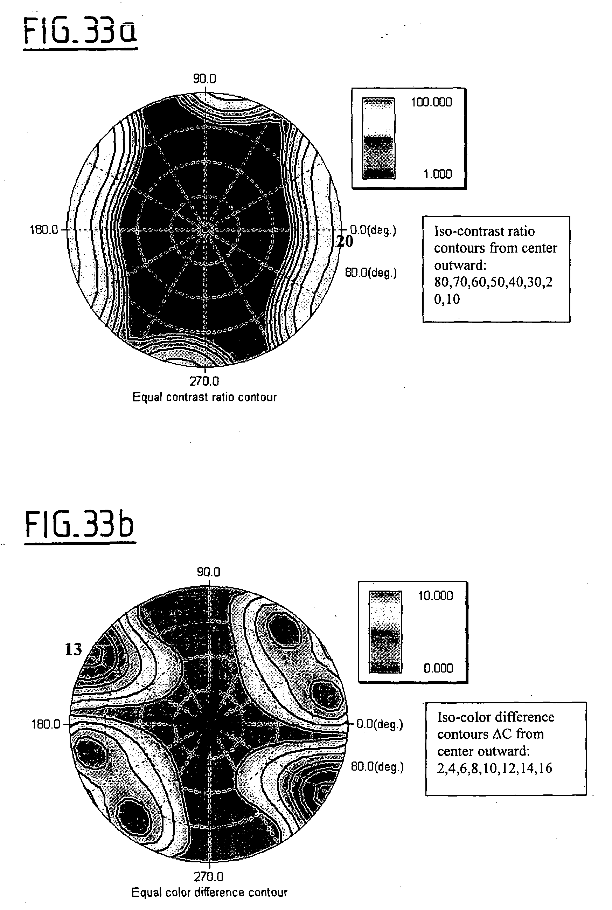

Figure 33 illustrates optical performance of compensated 2πBTN transmissive configuration of the invention by using one uniaxial film as described in table 9. More precisely figure 33a illustrates contrast conoscopic diagram, while figure 33b illustrates color shift conoscopic diagram.

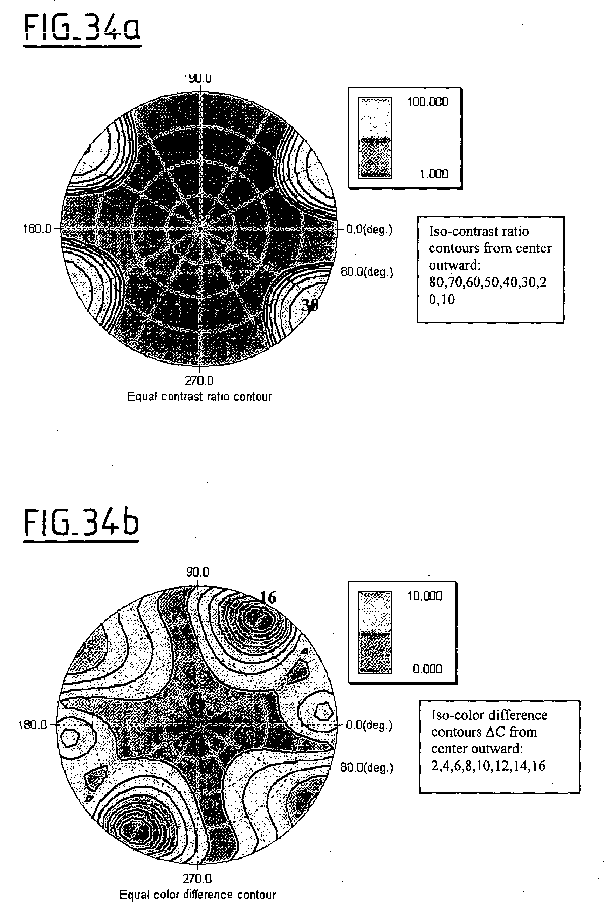

Figure 34 illustrates optical performance of compensated 2πBTN transmissive configuration of the invention using one biaxial film as described in table 10. More precisely figure 34a illustrates contrast conoscopic diagram, while figure 34b illustrates color shift conoscopic diagram.

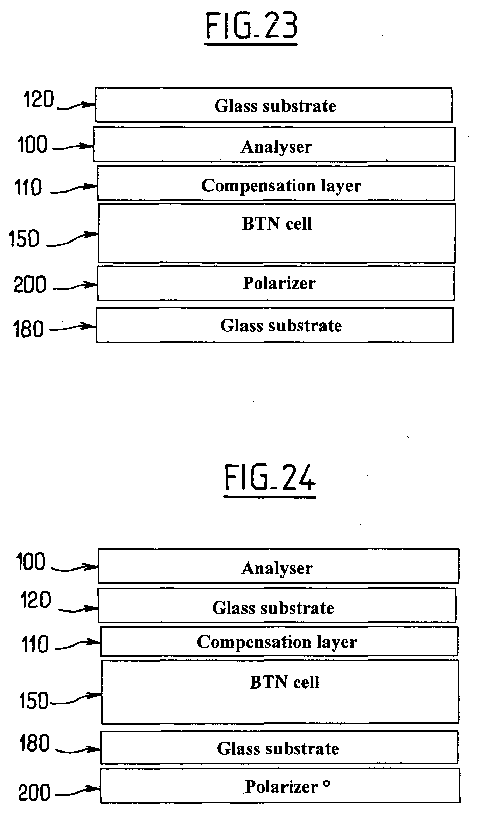

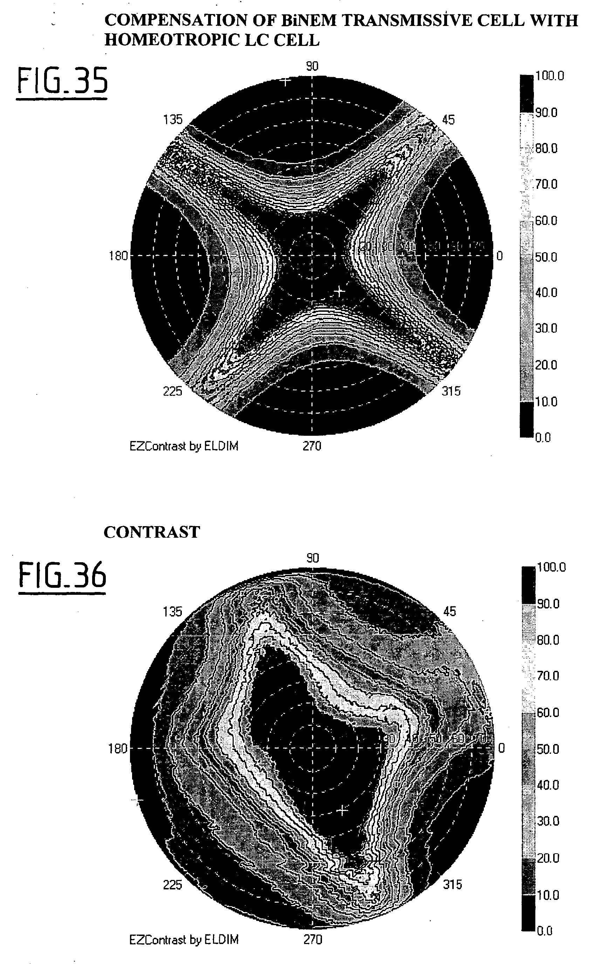

Figure 35 illustrates measured contrast ratio conoscopic diagram of a transmissive πBTN cell having the optical parameters illustrated in figure 7a and polarizers with TAC substrates laminated onto the glass substrates as described in figure 24.

Figure 36 illustrates measured contrast ratio conoscopic of the transmissive πBTN cell illustrated in figure 7a compensated with a homeotropic LC cell, which is optically equivalent to a C+ plate with a retardation of 200 nm.

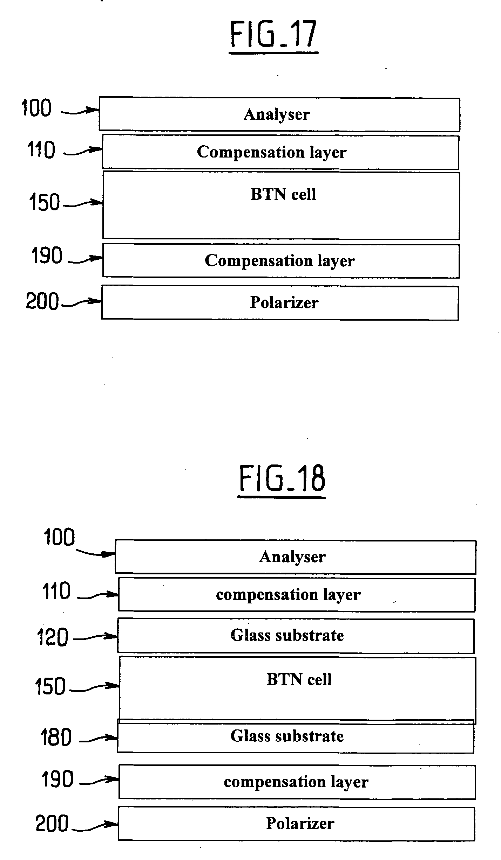

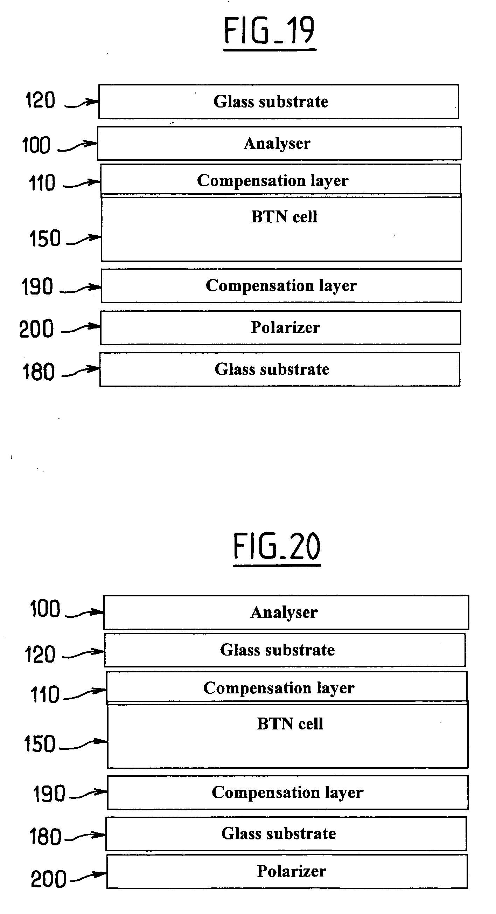

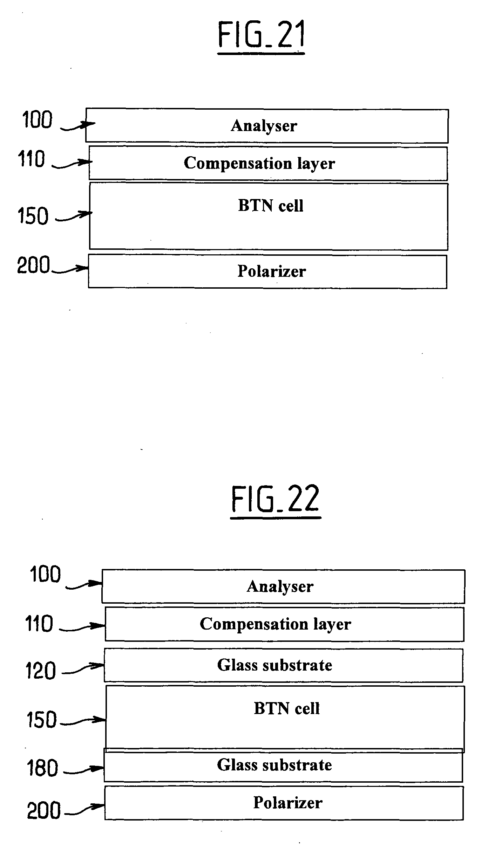

The first embodiment in accordance with the present invention comprises at least two compensation films, at least one on each side of the BTN cell.
The cell illustrated on figure 17 comprises a stack including an analyser 100, a first compensation layer 110, a BTN cell 150, a second compensation layer 190 and a polarizer 200.
The compensation layer 110, 190 can be positioned between the glass substrate 120, 180 and the external polarizer 100, 200 (embodiment illustrated on figure 18) or the compensation layer 110, 190 and the polarizer 100, 200 can be situated inside the cell (embodiment illustrated on figure 19) or the compensation layer 110, 190 can be situated inside the cell and the polarizer 100, 200 outside the cell (embodiment illustrated on figure 20). In the last two cases, the compensation layer 110, 190 are between LC molecules 150 and adjacent substrate 120, 180.
Of course a combination of the three embodiments illustrated on figures 18, 19 and 20 is also possible with each side of the LC cell corresponding to one embodiment.
The cell illustrated on figure 18 comprises a stack including an analyser 100, a first compensation layer 110, a glass substrate 120, a BTN cell 150, a second glass substrate 180, a second compensation layer 190 and a polarizer 200.
The cell illustrated on figure 19 comprises a stack including a glass substrate 120, an analyser 100, a first compensation layer 110, a BTN cell 150, a second compensation layer 190, a polarizer 200 and a second glass substrate 180.
The cell illustrated on figure 20 comprises a stack including an analyser 100, a glass substrate 120, a first compensation layer 110, a BTN cell 150, a second compensation layer 190, a second glass substrate 180 and a polarizer 200.
The second embodiment in accordance with the present invention comprises a compensation layer for the BTN display, situated only on one side of the LC cell (figure 21).
The cell illustrated on figure 21 comprises a stack including an analyser 100, a compensation layer 110, a BTN cell 150, and a polarizer 200.
The compensation layer 110 can be positioned between one glass substrate 120 and the corresponding external polarizer 100 or 200 (embodiment illustrated on figure 22), or the compensation layer 110 and the corresponding polarizer 100 or 200 can be situated inside the cell (embodiment illustrated on figure 23) or the compensation layer 110 can be situated inside the cell and the corresponding polarizer 100 or 200 outside the cell (embodiment illustrated on figure 24). In the two last cases, the compensation layer 110 is between the LC molecules 150 and adjacent front substrate 100.

The compensation layer 110 can be situated either on the polarizer side 200 or on the analyzer side100.

The cell illustrated on figure 22 comprises a stack including an analyser 100, a compensation layer 110, a glass substrate 120, a BTN cell 150, a second glass substrate 180 and a polarizer 200.

The cell illustrated on figure 23 comprises a stack including a glass substrate 120, an analyser 100, a compensation layer 110, a BTN cell 150, a polarizer 200 and a second glass substrate 180.

The cell illustrated on figure 24 comprises a stack including an analyser 100, a glass substrate 120, a compensation layer 110, a BTN cell 150, a second glass substrate 180 and a polarizer 200.

In accordance with the invention, the polarizer 100 on the front, observer side (the analyzer) is of the transmissive type, and the rear polarizer 200 can either be transmissive, reflective or transflective. As a practical example, when the commercial polarizers 100, 200 are laminated onto the outside of the BTN cell, the effects of polarizer's TAC substrate must be taken into account. For polarizers internal to the cell there is generally no TAC substrate present.

When the compensation layer 110, 190 is of biaxial type (Nz<0 or 0<Nz<1), for optimised compensation the largest refractive index direction (nx) of the compensator film (slow axis) is preferably parallel to the absorption axis of its adjacent polarizer.

When the compensation layer 110, 190 is composed of a stack of one positive uniaxial C plate(C+) and one uniaxial positive A plate (A+), for optimised compensation the largest refractive index direction (nx) of the A plate (slow axis) is preferably perpendicular to the absorption axis of its adjacent polarizer.

The compensator layer 110 or the two compensator layers 110, 190, provided according to the present invention, each compensator being composed of at least one retarder characterized by $-\infty \leq Nz \leq 1$, greatly improve(s) the contrast ratio of the display when viewed at oblique angles and decreases the observed color shift with viewing angle for both intrinsic BTN displays and BTN displays that have TAC layers on the polarizer substrates.

**DETAILED DESCRIPTION OF EMBODIMENTS IN ACCORDANCE WITH THE INVENTION**

**Embodiment 1: compensation layers on each side of πBTN LC cell**

Table 2: example of πBTN optical compensation using two positive uniaxial retarders on each side of the LC cell.

| Observer |
| --- |
| Analyzer A = 45° |
| -55nm TAC |
| +100 nm positive C plate |
| πBTN LC cell Δn·d (550 nm) = 220 nm |
| +100 nm positive C plate |
| -55 nm TAC |
| Polarizer P = -59° |
| Backlight |

The optical stack in this example is described in above table 2. This embodiment is in conformity with figures 17-20. Each compensation layers of this embodiment is composed of one positive uniaxial retarder with optical axis perpendicular to the substrates (C+), each having a retardation (nz-nx)·d = 100 nm. The -55 nm retardation of each TAC substrate on the inner sides of the two transmissive polarizers are taken into account.

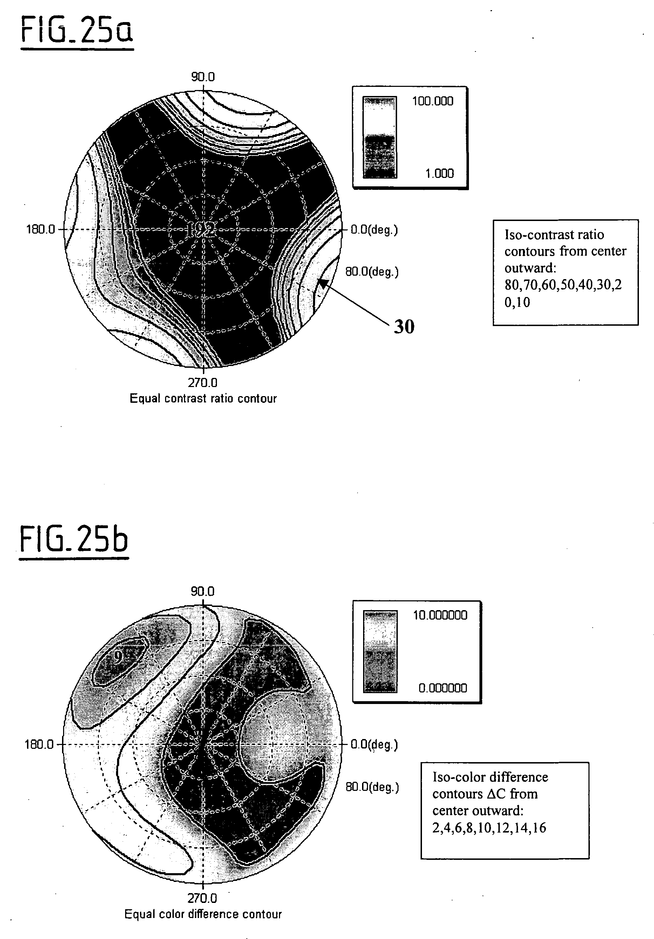

The corresponding contrast and color shift conoscopic diagrams are given figure 25. In order to evaluate the improvement in optical performance, these conoscopic diagrams should be compared with the conoscopic diagrams of figure 11. The isolines for a contrast of 10 now lie completely outside the diagram whose periphery corresponds to an incident angle of 80°, and only the isoline for a contrast ratio of 30 appears at the periphery. The maximum color shift occurring anywhere in the diagram has been reduced from 38 to 9. Thus, both contrast ratio and color shift have been dramatically improved by using the compensation layer according to the invention.

The total compensation birefringence is 200 nm, which is greater than the -110 nm contribution of the two TAC layers. The compensation layers not only compensate for the TAC layers, but also compensate for the intrinsic πBTN itself as shown in the conoscopic diagrams of figure 8.

**Embodiment 2: compensation layers on only one side of $\pi$BTN LC cell**

In the following embodiments indicated in tables 3 to 7, which are in conformity with the general teaching of figures 21-24, the compensating layer is on the side of the rear polarizer and not on the side of the front analyser.

Transmissive with two TAC layers - compensation with a single uniaxial plate

Table 3: example of $\pi$BTN optical compensation using one positive uniaxial retarder

| Observer |
| --- |
| Analyzer A = 45° |
| -55nm TAC |
| $\pi$BTN LC cell $\Delta$n·d(550 nm) = 220 nm |
| +185 nm positive C plate |
| -55 nm TAC |
| Polarizer P = -59° |
| Backlight |

The optical stack in this example is described in above table 3. The compensation layer of the invention is composed of one positive uniaxial retarder with optical axis perpendicular to the substrate (C+), having a retardation (nz-nx)·d = 185 nm. The -55 nm retardation of each TAC substrate on the inner sides of the two transmissive polarizers are taken into account.

The corresponding contrast and color shift conoscopic diagrams are given figure 26. In order to evaluate the improvement in optical performance, these conoscopic diagrams should be compared with the conoscopic diagrams of figure 11. The isolines for a contrast of 10 now lie completely outside the diagram whose periphery corresponds to an incident angle of 80°, and only the isoline for a contrast ratio of 20 appears at the periphery. The maximum color shift occurring anywhere in the diagram has been reduced from 38 to 15. Thus, both contrast ratio and color shift have been dramatically improved by using the birefringent films according to this invention. Except for a simple rotation of the conoscopic diagram, identical results are obtained if the positive uniaxial retarder is inserted between the analyzer and the cell instead of the polarizer and the cell.

The total compensation birefringence is 185 nm, which is greater than the -110 nm contribution of the two TAC layers. The retardation layers not only compensate for the TAC layers, but also compensate for the intrinsic $\pi$BTN itself as shown in the conoscopic diagrams of figure 8.

Transmissive with two TAC - compensation with a combination of A plate and C plate

Table 3bis: example of $\pi$BTN optical compensation using an A plate and a C plate

| Observer |
| --- |
| Analyzer A = 45° |
| -55nm TAC |
| $\pi$BTN LC cell $\Delta$n·d(550 nm) = 220 nm |
| +230 nm positive C plate |
| 40 nm positive A plate with slow axis at +31° |
| -55 nm TAC |
| Polarizer P = -59° |

The optical stack in this example is described in above table 3bis. The compensation layer of this invention is composed of two retarders, a positive uniaxial retarder with an optical axis perpendicular to the substrate (C+), having a retardation (nz-nx)·d = 230 nm and a positive A plate having a retardation (nx-ny)·d = 40 nm where the slow axis (nx) is perpendicular to the absorption axis of the adjacent polarizer. The - 55 nm retardation of each TAC substrate on the inner sides of the two transmissive polarizers are taken into account.

The corresponding contrast and color shift conoscopic diagrams for this optimized combination are given figure 26bis. Comparing these diagrams with the conoscopic diagrams of figure 26 for the single optimized C+ retarder reveals that the combination A+ and C+ gives slightly better angular performance that C+ alone.

Transmissive with two TAC - compensation with a single biaxial plate

Table 4: example of πBTN optical compensation using one biaxial retarder

| Observer |
|---|
| Analyzer A = 45° |
| -55nm TAC |
| πBTN LC cell Δn·d(550 nm) = 220 nm |
| Biaxial retarder with nx at -59° |
| -55 nm TAC |
| Polarizer P = -59° |
| Backlight |

The optical stack in this example is described in above table 4. The compensation layer of the invention is composed of one biaxial retarder with nz axis perpendicular to the substrate plane. Different biaxial retarders are evaluated, and examples of retardations and corresponding Nz values are detailed in table 5. Nz values vary from - ∞ to +1. The -55 nm retardation of each TAC substrate on the inner sides of the two transmissive polarizers are taken into account.

Table 5: Optimum retardation (in nm) for each biaxiality parameter $Nz = (n_x-n_z)/(n_x-n_y)$ for πBTN optical compensation using one biaxial film

| Nz | - ∞ | -10 | -5 | -2 | -1 | -0.5 | 0 | 0.5 | 1 |
|---|---|---|---|---|---|---|---|---|---|
| $(n_x-n_y)\cdot d$ | 0.0 | 17.5 | 32.0 | 65.0 | 100 | 140 | 185 | 210 | 290 |
| $(n_x-n_z)\cdot d$ | -185 | -175 | -160 | -130 | -100 | -70 | 0.0 | +105 | +290 |

The corresponding contrast and color shift conoscopic diagrams are given figure 27 (a: Nz =-∞ ; b: Nz =-10; c: Nz=-5), figure 28 (a: Nz =-2; b: Nz =-1; c: Nz=-0.5) and figure 29 (a: Nz =0; b: Nz =0.5; c: Nz=1). For optimum compensation, the nx axis (nx>ny) is preferably positioned parallel to the absorption axis of its adjacent polarizer. In order to evaluate the improvement in optical performance, these conoscopic diagrams should be compared with the πBTN conoscopic diagrams of figure 11 (with TAC) and figure 8 (intrinsic πBTN without TAC).

Except for a simple rotation of the conoscopic diagrams, identical results are obtained if the biaxial retarder is inserted between the analyzer and the cell instead of the polarizer and the cell. Of course in this case the slow axis of the retarder would be oriented parallel to the transmission axis of the analyzer instead of the polarizer.

According to the invention two ranges for Nz and (nx-nz).d are identified: a first range where Nz is between -∞ and 0 and (nx-nz).d is between -250 nm and 0 nm, and a second range where Nz is between 0 and 1 and (nx-nz).d is between 0 nm and 300nm. By using biaxial retarders according to the invention in the first range, contrast ratio and color shift are improved compared to πBTN both with TAC layers (figure 11) and without TAC layers (figure 8). By using biaxial retarders according to the invention in the second range, contrast ratio and color shift are improved compared to πBTN with TAC layers (figure 11), but no improvement is obtained for intrinsic πBTN without TAC layers (figure 8). Best compensation is obtained for retarders in the first range having Nz <0 and the absolute value |(nx-nz).d| smaller than or equal to the value of Δn·d of the LC cell (typically 200 to 250 nm).

Transmissive without TAC layers - compensation with a single uniaxial plate

Table 6: example of πBTN optical compensation using one positive uniaxial retarder and polarizers without TAC

| Observer |
| --- |
| Analyzer A = 45° |
| πBTN LC cell Δn·d(550 nm) = 220 nm |
| + 80 nm Positive C plate |
| Polarizer P = -59° |
| Backlight |

The optical stack given as an example is described on above table 6. The proposed compensation layer is composed of one positive uniaxial retarder with optical axis perpendicular to the plane substrate (C+), having a retardation (nz-nx) = 80 nm. The polarizers are of the transmissive type without TAC layers.

The corresponding contrast and color shift conoscopic diagrams are given figure 30. In order to evaluate the improvement in optical performance, these conoscopic diagrams should be compared with the conoscopic diagrams of figure 8. The isolines for a contrast of 10 now lie completely outside the diagram whose periphery corresponds to an incident angle of 80°, and only the isoline for a contrast ratio of 30 appears at the periphery. The maximum color shift occurring anywhere in the diagram has been reduced from 19 to 12. Thus, both contrast ratio and color shift have been dramatically improved by using the birefringent films according to the invention. Except for a simple rotation of the conoscopic diagram, identical results are obtained if the positive uniaxial retarder is inserted between the analyzer and the cell instead of the polarizer and the cell.

Transmissive without TAC layers - compensation with a single biaxial layer

Table 7: example of πBTN optical compensation using one positive biaxial retarder and polarizers without TAC

| Observer |
| --- |
| Analyzer A = 45° |
| πBTN LC cell Δn·d(550 nm) = 220 nm |
| Biaxial retarder with nx at -59° Nz = -2 and (nx-ny)d= 27.5 nm |
| Polarizer P = -59° |
| Backlight |

The optical stack in this example is described in above table 7. The compensation layer of the invention is composed of one positive biaxial retarder with the nz axis perpendicular to the substrate plane and Nz=-2 with (nx-ny) ·d = 27.5 nm. The polarizers are of the transmissive type without TAC layers.

The corresponding contrast and color shift conoscopic diagrams are given figure 31. In order to evaluate the improvement in optical performance, these conoscopic diagrams should be compared with the conoscopic diagrams of figure 8. The isolines for a contrast of 10 now lie completely outside the diagram whose periphery corresponds to an incident angle of 80°, and only the isoline for a contrast ratio of 30 appears at the periphery. The maximum color shift occurring anywhere in the diagram has been reduced from 19 to 11. Thus, both contrast ratio and color shift have been dramatically improved by using the birefringent films according to this invention. Except for a simple rotation of the conoscopic diagrams, identical results are obtained if the biaxial retarder is inserted between the analyzer and the cell instead of the polarizer and the cell. Of course in this case the slow axis of the retarder would be oriented parallel to the transmission axis of the analyzer instead of the polarizer.

Reflective with one TAC layer - compensation with a single uniaxial plate

Table 8: example of reflective πBTN optical compensation using one positive uniaxial retarder and analyser with TAC

| Observer |
| --- |
| Analyzer A = 49° |
| -55nm TAC |
| + 130 nm positive C plate |
| πBTN LC cell Δn·d(550 nm) = 235 nm |
| Reflective Polarizer P = -34° |

The optical stack given as an example is described on above table 8. In this case, the compensating plate is provided between the front analyser and the crystal liquid (in conformity with figures 21 - 24). The proposed compensation layer is composed of one positive uniaxial retarder with optical axis perpendicular to the plane substrate (C+), having a retardation (nz-nx) = 130 nm. The front polarizer is transmissive type with a TAC layer and the rear polarizer is reflective type without a TAC layer.

The corresponding contrast and color shift conoscopic diagrams are given figure 32. In order to evaluate the improvement in optical performance, these conoscopic diagrams should be compared with the conoscopic diagrams of figure 9. The isolines for a contrast of 10 now lie completely outside the diagram whose periphery corresponds to an incident angle of 80°, and only the isoline for a contrast ratio of 30 appears at the periphery. The contrast ratio has been dramatically improved by using the birefringent film according to this invention

**Embodiment 2 : compensation films on one side of a 2πBTN LC cell**

Transmissive with two TAC layers - compensation with a single uniaxial plate

The embodiments corresponding to tables 9 and 10 are in conformity with the general teaching of figures 21 - 24 with the compensating plate provided on the rear side of the cell and not on the front side.

Table 9: example of 2πBTN optical compensation using one positive uniaxial retarder

| Observer |
| --- |
| Analyzer A = - 56° |
| -55nm TAC |
| 2πBTN LC cell Δn·d(550 nm) = 274 nm |
| +250 nm positive C plate |
| -55 nm TAC |
| Polarizer P = 45° |
| Backlight |

The optical stack in this example is described in above table 9. The compensation layer of this invention is composed of one positive uniaxial retarder with optical axis perpendicular to the substrate (C+), having a retardation (nz-nx)·d = 250 nm. The -55 nm retardation of each TAC substrate on the inner sides of the two transmissive polarizers are taken into account.

The corresponding contrast and color shift conoscopic diagrams are given figure 33. In order to evaluate the improvement in optical performance, these conoscopic diagrams should be compared with the conoscopic diagrams of figure 15 (without TAC) and figure 16 (with TAC). The isolines for a contrast of 10 now lie completely outside the diagram whose periphery corresponds to an incident angle of 80°, and only the isoline for a contrast ratio of 20 appears at the periphery. The maximum color shift occurring anywhere in the diagram has been reduced from 45 (with TAC) to 13. Thus, both contrast ratio and color shift have been dramatically improved by using the birefringent films according to this invention. Except for a simple rotation of the conoscopic diagram, identical results are obtained if the positive uniaxial retarder is inserted between the analyzer and the cell instead of the polarizer and the cell.

The total compensation birefringence is 250 nm, which is greater than the -110 nm contribution of the two TAC layers. The compensation layer not only compensates for the TAC layers, but also compensates for the intrinsic πBTN itself as shown in the conoscopic diagrams of figure 15.

Transmissive with two TAC layers - compensation with a single biaxial plate

Table 10: example of 2πBTN optical compensation using one positive biaxial retarder

| Observer |
| --- |
| Analyzer A = - 56° |
| -55nm TAC |
| 2πBTN LC cell Δn·d(550 nm) = 274 nm |
| Biaxial retarder nx at 45° Nz = -2 and (nx-ny)d= 114 nm |
| -55 nm TAC |
| Polarizer P = 45° |
| Backlight |

The optical stack in this example is described in above table 10. The compensation layer of this invention is composed of one positive biaxial retarder having Nz = -2 and a retardation (nx-ny)·d = 114 nm. The -55 nm retardation of each TAC substrate on the inner sides of the two transmissive polarizers are taken into account.

The corresponding contrast and color shift conoscopic diagrams are given figure 34. In order to evaluate the improvement in optical performance, these conoscopic diagrams should be compared with the conoscopic diagrams of figure 15 (without TAC) and figure 16 (with TAC). The isolines for a contrast of 10 now lie completely outside the diagram whose periphery corresponds to an incident angle of 80°, and only the isoline for a contrast ratio of 30 appears at the periphery. The maximum color shift occurring anywhere in the diagram has been reduced from 45 (with TAC) to 16. Thus, both contrast ratio and color shift have been dramatically improved by using the birefringent film according to this invention. Except for a simple rotation of the conoscopic diagram, identical results are obtained if the positive biaxial retarder is inserted between the analyzer and the cell instead of the polarizer and the cell. Of course in this case the slow axis of the retarder would be oriented parallel to the transmission axis of the analyzer instead of the polarizer

The retardation layer not only compensates for the TAC layers, but leads to BTN displays having improved contrast ratio and color shift compared to the intrinsic BTN display itself (see figure 15).

**Experimental validation of the invention - example of embodiment 2 for a transmissive πBTN cell compensated by a single positive uniaxial retarder**

A πBTN cell having the optical parameters illustrated in figure 7a was realized experimentally with the polarizers positioned outside the cell with each one having TAC substrates. The measured contrast conoscopic diagram is given in figure 35. This measured conoscopic diagram has a shape quite similar to the simulated one shown on figure 11a.

A compensation layer consisting of one uniaxial positive retarder (C+) was realized with a nematic liquid crystal cell having homeotropic alignment where the optic axis is perpendicular to the substrate. Since nematic liquid crystals have a positive optical anisotropy this arrangement is optically equivalent to a positive C plate. The cell gap is 1.2μm and the LC mixture has a Δn equal to 0.17, so the retardation of this homeotropic cell is 200 nm, very close to the calculated optimum of 185 nm.

This homeotropic cell is optically coupled to the πBTN cell with an index matching fluid, and the polarizers are laminated onto the glass substrates, one on the πBTN cell side and the other on the homeotropic cell side, as illustrated in figure 24. Figure 36 shows the measured contrast conoscopic diagram of this two-cell arrangement. Comparing to the conoscopic diagrams of figures 35 and 36, it can be seen that the contrast ratio has been dramatically improved by using the C+ retarder, in agreement with the simulations.

Of course the present invention is not limited to the above described examples but extend to any embodiments in accordance with the enclosed claims.

**Claims**

**1.** A bistable twisted nematic (BTN) liquid crystal display device comprising a liquid crystal layer (150) situated between first and second polarizers (100, 200), said layer (150) in the absence of an applied electric field having two stable, uniformly twisted textures, and at least one compensation layer (110, 190) positioned between said first and second polarizers (100, 200), said compensation layer (110, 190) being composed of at least one birefringent film, said birefringent film having an optical anisotropy defined by three characteristic refractive indices nx, ny, nz, with nx $\geq$ ny and nz being perpendicular to the plane of the cell substrates (120, 180) with biaxiality parameter Nz equal to (nx-nz)/(nx-ny), **characterized in that** Nz lies between - $\infty$ and 1 in order to compensate the birefringence of the bistable texture corresponding to the dark optical state in the case of oblique observation and thus improve the range of viewing angles to achieve a high contrast ratio and minimal color shift.

2. Device according to claim 1, **characterized in that** each birefringent film (110, 190) is in the group comprising a uniaxial positive C plate (nz > nx = ny with Nz = - $\infty$), a uniaxial positive A plate (nx=nz>ny with Nz=0) or a biaxial positive plate having either nz > nx > ny (Nz < 0) or nx > nz > ny (0 < Nz < 1).

3. Device according to one of claims 1 or 2, **characterized in that** the compensation layer (110, 190) consists of a single retarder of the desired retardation.

4. Device according to one of claims 1 or 2, **characterized in that** the compensation layer (110, 190) consists of a plurality of retarders laminated together whose total retardation when added together equals the desired retardation.

5. Device according to one of claims 1 to 4, **characterized in that** said device comprises two compensation layers (110, 190) which are of different types.

6. Device according to one of claims 1 to 5, **characterized in that** the switch between the two textures is obtained by applying an electric field having at least one component perpendicular to the plane of the liquid crystal cell substrates (120, 180).

7. Device according to one of claims 1 to 6, **characterized in that** the twists of the two stable textures differ by an angle being equal mainly to a multiple of $\pi$ smaller or equal to $2\pi$.

8. Device according to one of claims 1 to 4 and 6 or 7, **characterized in that** it comprises a single compensation layer (110, 190).

9. Device according to claim 8, **characterized in that** it comprises one compensation layer (110) on the observer side.

10. Device according to one of claims 8 or 9, **characterized in that** the compensation layer (110) is between the front substrate (120) and the front polarizer (100).

11. Device according to one of claims 8 or 9, **characterized in that** the compensation layer (110) is between the LC molecules (150) and adjacent front substrate (100).

12. Device according to one of claims 8, 9 and 11, **characterized in that** the compensation layer (110) and the corresponding polarizer (100) are situated inside the cell delimited by the substrates (120, 180).

13. Device according to one of claims 8, 9 and 11, **characterized in that** the compensation layer (110) is situated inside the cell delimited by the substrates (120, 180) and the corresponding polarizer (100) is outside the cell.

14. Device according to claim 8, **characterized in that** it comprises one compensation layer (190) on the side opposite to the observer side.

15. Device according to one of claims 8 or 14, **characterized in that** the compensation layer (190) is between the rear substrate (180) and the rear polarizer (200).

16. Device according to one of claims 8 or 14, **characterized in that** the compensation layer (190) is between the LC molecules (150) and adjacent rear substrate (180).

17. Device according to one of claims 8, 14 and 16, **characterized in that** the compensation layer (190) and the corresponding polarizer (200) are situated inside the cell delimited by the substrates (120, 180).

18. Device according to one of claims 8, 14 and 16, **characterized in that** the compensation layer (190) is situated inside the cell delimited by the substrates (120, 180) and the corresponding polarizer (200) is outside the cell.

19. Device according to one of claims 1 to 7, **characterized in that** it comprises two compensation layers (110, 190), one compensation layer on each side of the LC cell.

20. Device according to claim 19, **characterized in that** at least one compensation layer (110, 190) is between adjacent substrate (120, 180) and polarizer (100, 200).

21. Device according to one of claims 19 or 20, **characterized in that** at least one compensation layer (110, 190) is between LC molecules (150) and adjacent substrate (120, 180).

22. Device according to one of claims 19 to 21, **characterized in that** a compensation layer (110, 190) and a polarizer (100, 200) are situated inside the cell delimited by the two substrates (120, 180).

23. Device according to one of claims 19 to 22, **characterized in that** a compensation layer (110, 190) is situated inside the cell delimited by the two substrates (120, 180) and a polarizer (100, 200) is outside the cell.

24. Device according to one of claims 1 to 23, **characterized in that** the front polarizer (100) on the observer side is of transmissive type.

25. Device according to one of claims 1 to 24, **characterized in that** the rear polarizer (200) on the side opposite to the observer side is of transmissive type.

26. Device according to one of claims 1 to 24, **characterized in that** the rear polarizer (200) on the side opposite to the observer side is of reflective type.

27. Device according to one of claims 1 to 24, **characterized in that** the rear polarizer (200) on the side opposite to the observer side is of transflective type.

28. Device according to one of claims 1 to 27, **characterized in that** Nz, which is defined as $Nz = (nx-nz)/(nx-ny)$, is comprised between $-\infty$ and 0, corresponding to $nz \geq nx \geq ny$.

29. Device according to one of claims 1 to 27, **characterized in that** Nz, which is defined as $Nz = (nx-nz)/(nx-ny)$, is equal to $-\infty$, corresponding to $nz \geq nx = ny$.

30. Device according to one of claims 1 to 29, **characterized in that** absolute retardation $|(nx-nz)d|$ is smaller or equal to the LC retardation And.

31. Device according to one of claims 1 to 27, **characterized in that** Nz, which is defined as $Nz = (nx-nz)/(nx-ny)$, is comprised between 0 and 1, corresponding to $nx \geq nz \geq ny$.

32. Device according to one of claims 1 to 31, **characterized in that** the greater in plane index (nx) axis is parallel to the adjacent polarizer absorption axis.

33. Device according to one of claims 1 to 32, **characterized in that** the compensation layer (110, 190) is composed of at least two birefringent films, one birefringent film having Nz=0 with the larger in plane index (nx) axis being perpendicular to the adjacent polarizer absorption axis.

34. Device according to one of claims 1 to 33, **characterized in that** Nz, being defined as $Nz = (nx-nz)/(nx-ny)$, the compensation layer (110, 190) comprises one birefringent film having $Nz=-\infty$.

35. Device according to one of claims 1 to 34, **characterized in that** the birefringent film (110, 190) is realised by stretching plastic films.

36. Device according to one of claims 1 to 34, **characterized in that** the birefringent film (110, 190) is realised with polymerised liquid crystal molecules.

37. Device according to one of claims 1 to 34, **characterized in that** the birefringent film (110, 190) is realised with polymerised nematic liquid crystal molecules.

38. Device according to one of claims 1 to 34, **characterized in that** the birefringent film (110, 190) is generated by exposing photopolymers to polarized light.

39. Device according to one of claims 1 to 34, **characterized in that** the birefringent film (110, 190) is deposited on the substrate surfaces (120, 180) through a coating process.

40. Device according to one of claims 1 to 39, **characterized in that** the birefringent film (110, 190) is part of the polarizer (100, 200).

41. Device according to one of claims 1 to 40, **characterized in that** the twists of the two stable textures differ by an angle being mainly equal to $\pi$.

42. Device according to one of claims 1 to 41, **characterized in that** the d/p ratio is d/p $\approx$ 0.25 + $\phi/2\pi$, $\phi$ being the twist of the lower twisted texture, d being the liquid crystal layer thickness or cell gap and p being the intrinsic pitch of the chiral nematic liquid crystal.

43. Device according to one of claims 1 to 40, **characterized in that** the twists of the two stable textures differ by an angle being mainly equal to $2\pi$.

44. Device according to one of claims 1 to 40 and 43, **characterized in that** the d/p ratio is d/p $\approx$ 0.5 + $\phi/2\pi$, $\phi$ being the twist of the lower twisted texture, d being the liquid crystal layer thickness or cell gap and p being the intrinsic pitch of the chiral nematic liquid crystal.

45. Device according to one of claims 1 to 44, **characterized in that** it comprises a stack as defined in the following table :

| Observer |
| --- |
| Analyzer A = 45° |
| -55nm TAC |
| +100 nm positive C plate |
| $\pi$BTN LC cell $\Delta$n·d (550 nm) = 220 nm |
| +100 nm positive C plate |
| -55 nm TAC |
| Polarizer P = -59° |
| Backlight |

46. Device according to one of claims 1 to 44, **characterized in that** it comprises a stack as defined in the following table :

| Observer |
| --- |
| Analyzer A = 45° |
| -55nm TAC |
| $\pi$BTN LC cell $\Delta$n·d(550 nm) = 220 nm |
| +185 nm positive C plate |
| -55 nm TAC |
| Polarizer P = -59° |
| Backlight |

47. Device according to one of claims 1 to 44, **characterized in that** it comprises a stack as defined in the following table :

| Observer |
|---|
| Analyzer A = 45° |
| πBTN LC cell Δn·d(550 nm) = 220 nm |
| + 80 nm Positive C plate |
| Polarizer P = -59° |
| Backlight |

48. Device according to one of claims 1 to 44, **characterized in that** it comprises a stack as defined in the following table :

| Observer |
|---|
| Analyzer A = 49° |
| -55nm TAC |
| + 130 nm positive C plate |
| πBTN LC cell Δn·d(550 nm) = 235 nm |
| Reflective Polarizer P = -34° |

49. Device according to one of claims 1 to 44, **characterized in that** it comprises a stack as defined in the following table :

| Observer |
|---|
| Analyzer A = - 56° |
| -55nm TAC |
| 2πBTN LC cell Δn·d(550 nm) = 274 nm |
| +250 nm positive C plate |
| -55 nm TAC |
| Polarizer P = 45° |
| Backlight |

50. Device according to one of claims 45 to 49, **characterized in that** each compensation layer (110, 190) is composed of one positive uniaxial retarder with optical axis perpendicular to the substrates (120, 180).

51. Device according to one of claims 1 to 44, **characterized in that** it comprises a stack as defined in the following table :

| Observer |
|---|
| Analyzer A = 45° |
| -55nm TAC |
| πBTN LC cell Δn·d(550 nm) = 220 nm |
| +230 nm positive C plate |
| 40 nm positive A plate with slow axis at +31° |
| -55 nm TAC |
| Polarizer P = -59° |

**52.** Device according to claim 51, **characterized in that** the compensation layer (190) is composed of two retarders, a positive uniaxial retarder with an optical axis perpendicular to the substrate (C+), having a retardation (nz-nx)·d = 230 nm and a positive A plate having a retardation (nx-ny)·d = 40 nm where the slow axis (nx) is perpendicular to the absorption axis of the adjacent polarizer.

**53.** Device according to one of claims 1 to 44, **characterized in that** it comprises a stack as defined in the following table :

| Observer |
| --- |
| Analyzer A = 45° |
| -55nm TAC |
| πBTN LC cell Δn·d(550 nm) = 220 nm |
| Biaxial retarder with nx at -59° |
| -55 nm TAC |
| Polarizer P = -59° |
| Backlight |

**54.** Device according to claim 53, **characterized in that** the compensation layer (190) is composed of one biaxial retarder with nz axis perpendicular to the substrate plane.

**55.** Device according to claim 53 or 54, **characterized in that** the compensation layer (190) has its nx axis (nx>ny) positioned parallel to the absorption axis of its adjacent polarizer.

**56.** Device according to one of claims 1 to 44, **characterized in that** it comprises a stack as defined in the following table :

| Observer |
| --- |
| Analyzer A = 45° |
| πBTN LC cell Δn·d(550 nm) = 220 nm |
| Biaxial retarder with nx at -59° Nz = -2 and (nx-ny)d= 27.5 nm |
| Polarizer P = -59° |
| Backlight |

**57.** Device according to claim 56, **characterized in that** the compensation layer (190) is composed of one positive biaxial retarder with the nz axis perpendicular to the substrate plane.

**58.** Device according to one of claims 1 to 44, **characterized in that** it comprises a stack as defined in the following table :

| Observer |
| --- |
| Analyzer A = - 56° |
| -55nm TAC |
| 2πBTN LC cell Δn·d(550 nm) = 274 nm |
| Biaxial retarder nx at 45° Nz = -2 and (nx-ny)d= 114 nm |
| -55 nm TAC |

(continued)

| Polarizer P = 45° |
| --- |
| Backlight |

**59.** Device according to claim 58, **characterized in that** the compensation layer (190) is composed of one positive biaxial retarder

**60.** Process of manufacturing a bistable twisted nematic (BTN) liquid crystal display, wherein said process comprising the steps of providing a liquid crystal layer (150) situated between first and second polarizers (100, 200), said layer (150) in the absence of an applied electric field having two stable, uniformly twisted textures, and providing at least one compensation layer (110, 190) positioned between said first and second polarizers (100, 200), said compensation layer (110, 190) being composed of at least one birefringent film or retarder, said birefringent film having an optical anisotropy defined by three characteristic refractive indices nx, ny, nz, with nx ≥ ny and nz being perpendicular to the plane of the cell substrates with biaxiality parameter Nz equal to (nx-nz)/(nx-ny), said process being **characterized in that** Nz lies between - ∞ and 1 in order to compensate the birefringence of the bistable texture corresponding to the dark optical state in the case of oblique observation and thus improve the range of viewing angles to achieve a high contrast ratio and minimal color shift.

# FIG.1

## FIG.2a

nz

nx=ny

UFp

## FIG.2b

nx=ny

z

nz

UFp

## FIG.3

10

14

12

FIG.4

20

24

22

26

28

d

- 38 -

34

36

30

32

FIG.5

32

P

40

42

24

φA

A

Y'

X'

Z'

20

FIG.6

FIG.7a

| Analyser A = 45° | 24 |
| πBTN LC cell with Δn·d (550 nm) = 220 nm<br>U twist : -7°  -  T twist -173° | |
| Polarizer P = -59° | 32 |

Observer

Backlight

FIG.7b

| Analyser A = 49° | 24 |
| πBTN LC cell with Δn·d (550 nm) = 235 nm<br>U twist : -7°  -  T twist -173° | |
| Reflective Polarizer  P = 34° | 32 |

Observer

## FIG.8a

Equal contrast ratio contour

## FIG.8b

Equal color difference contour

## FIG.9a

Equal contrast ratio contour

## FIG.9b

Equal color difference contour

## FIG_10a

Observer

| | |
|---|---|
| Analyser A = 45° | ~ 24 |
| TAC substrate –55 nm | |
| πBTN LC cell with Δn·d (550 nm) = 220 nm<br>U twist : -7°  -  T twist -173° | |
| TAC substrate –55 nm | |
| Polarizer P = -59° | ~ 32 |

Backlight

## FIG_10b

Observer

| | |
|---|---|
| Analyser A = 49° | ~ 24 |
| TAC substrate –55 nm | |
| πBTN LC cell with Δn·d (550 nm) = 235 nm<br>U twist : -7°  -  T twist -173° | |
| Reflective Polarizer  P = 34° | ~ 32 |

## FIG.11a

Equal contrast ratio contour

## FIG.11b

Equal color difference contour

## FIG.12a

Equal contrast ratio contour

## FIG.12b

Equal color difference contour

## FIG.13

φ+π TWIST

INITIAL
OR
RELAX
STATE

RESET
(FREDRICK'S
TRANSITION)

UNIFORM
METASTABLE
STATE

TWISTED
METASTABLE
STATE

RESET
STATE

E

φ TWIST

φ+2π TWIST

## FIG.14

Observer

Analyser A = -56°                                    24

2πBTN LC cell with Δn· d (550nm) = 274
nm

Polarizer P = 45°                                    32

Backlight

# FIG.15a

90.0

180.0 — 0.0(deg.)

80.0(deg.)

**10**

100.000

1.000

270.0

Equal contrast ratio contour

# FIG.15b

90.0

180.0 — 0.0(deg.)

80.0(deg.)

10.000

0.000

270.0

Equal color difference contour

## FIG.16a

·Equal contrast ratio contour

## FIG.16b

Equal color difference contour

## FIG.17

| | |
|---|---|
| 100 → | Analyser |
| 110 → | Compensation layer |
| 150 → | BTN cell |
| 190 → | Compensation layer |
| 200 → | Polarizer |

## FIG.18

| | |
|---|---|
| 100 → | Analyser |
| 110 → | compensation layer |
| 120 → | Glass substrate |
| 150 → | BTN cell |
| 180 → | Glass substrate |
| 190 → | compensation layer |
| 200 → | Polarizer |

## FIG_19

| | |
|---|---|
| 120 → | Glass substrate |
| 100 → | Analyser |
| 110 → | Compensation layer |
| 150 → | BTN cell |
| 190 → | Compensation layer |
| 200 → | Polarizer |
| 180 → | Glass substrate |

## FIG_20

| | |
|---|---|
| 100 → | Analyser |
| 120 → | Glass substrate |
| 110 → | Compensation layer |
| 150 → | BTN cell |
| 190 → | Compensation layer |
| 180 → | Glass substrate |
| 200 → | Polarizer |

## FIG.21

| | |
|---|---|
| 100 | Analyser |
| 110 | Compensation layer |
| 150 | BTN cell |
| 200 | Polarizer |

## FIG.22

| | |
|---|---|
| 100 | Analyser |
| 110 | Compensation layer |
| 120 | Glass substrate |
| 150 | BTN cell |
| 180 | Glass substrate |
| 200 | Polarizer |

## FIG.23

| | |
|---|---|
| 120 → | Glass substrate |
| 100 → | Analyser |
| 110 → | Compensation layer |
| 150 → | BTN cell |
| 200 → | Polarizer |
| 180 → | Glass substrate |

## FIG.24

| | |
|---|---|
| 100 → | Analyser |
| 120 → | Glass substrate |
| 110 → | Compensation layer |
| 150 → | BTN cell |
| 180 → | Glass substrate |
| 200 → | Polarizer ° |

## FIG.25a

90.0

100.000

1.000

180.0 — 0.0(deg.)

80.0(deg.)

**30**

270.0

Equal contrast ratio contour

Iso-contrast ratio
contours from center
outward:
80,70,60,50,40,30,2
0,10

## FIG.25b

90.0

10.000000

0.000000

180.0 — 0.0(deg.)

80.0(deg.)

270.0

Equal color difference contour

Iso-color difference
contours ΔC from
center outward:
2,4,6,8,10,12,14,16

## FIG. 26a

90.0

180.0 — 0.0(deg.)

80.0(deg.)

**20**

100.000

1.000

270.0

Equal contrast ratio contour

Iso-contrast ratio
contours from center
outward:
80,70,60,50,40,30,2
0,10

## FIG. 26b

90.0

15

180.0 — 0.0(deg.)

80.0(deg.)

10.000

0.000

270.0

Equal color difference contour

Iso-color difference
contours ΔC from
center outward:
2,4,6,8,10,12,14,16

## FIG.26 bis a

90.0

180.0 — 0.0(deg.)

80.0(deg.)

270.0

Equal contrast ratio contour

100.000

1.000

Iso-contrast ratio
contours from center
outward:
80,70,60,50,40,30,2
0,10

## FIG.26 bis b

90.0

180.0 — 0.0(deg.)

80.0(deg.)

270.0

Equal color difference contour

10.000

0.000

Iso-color difference
contours ΔC from
center outward:
2,4,6,8,10,12,14,16

**contrast ratio**          **color shift ΔC**

## FIG.27a

| 27a : Uniaxial Nz = – ∞ |

Equal contrast ratio contour

Iso-contrast ratio contours from center outward: 80,70,60,50,40,30,20,10

Equal color difference contour

Iso-color difference contours ΔC from center outward: 2,4,6,8,10,12,14,16

## FIG.27b

| 27b : Nz = -10 |

Equal contrast ratio contour

Equal color difference contour

## FIG.27c

| 27c : Nz = -5 |

Equal contrast ratio contour

Equal color difference contour

42

**contrast ratio**

**color shift ΔC**

## FIG.28a

28a : Nz = -2

Iso-contrast ratio contours from center outward: 80,70,60,50,40,30,20,10

Iso-color difference contours ΔC from center outward: 2,4,6,8,10,12,14,16

## FIG.28b

28b : Nz = -1

## FIG.28c

28c : Nz = -0.5

contrast ratio

color shift ΔC

## FIG.29a

29a : Nz = 0

Iso-contrast ratio contours from center outward: 80,70,60,50,40,30,20,10

Iso-color difference contours ΔC from center outward: 2,4,6,8,10,12,14,16

## FIG.29b

29b : Nz = +0.5

## FIG.29c

29c : Nz = +1

## FIG.30a

Iso-contrast ratio
contours from center
outward:
80,70,60,50,40,30,2
0,10

Equal contrast ratio contour

## FIG.30b

Iso-color difference
contours ΔC from
center outward:
2,4,6,8,10,12,14,16

Equal color difference contour

# FIG.31a

Equal contrast ratio contour

Iso-contrast ratio contours from center outward: 80,70,60,50,40,30,20,10

# FIG.31b

Equal color difference contour

Iso-color difference contours ΔC from center outward: 2,4,6,8,10,12,14,16

## FIG. 32a

90.0

100.000

1.000

180.0 — 30 0.0(deg.)

80.0(deg.)

Iso-contrast ratio contours from center outward: 80,70,60,50,40,30,2 0,10

270.0

Equal contrast ratio contour

## FIG. 32b

90.0

10.000000

0.000000

180.0 — 0.0(deg.)

80.0(deg.)

Iso-color difference contours ΔC from center outward: 2,4,6,8,10,12,14,16

270.0

Equal color difference contour

## FIG.33a

Equal contrast ratio contour

100.000

1.000

Iso-contrast ratio contours from center outward: 80,70,60,50,40,30,2 0,10

## FIG.33b

Equal color difference contour

10.000

0.000

Iso-color difference contours $\Delta C$ from center outward: 2,4,6,8,10,12,14,16

48

# FIG.34a

Equal contrast ratio contour

Iso-contrast ratio contours from center outward: 80,70,60,50,40,30,2 0,10

# FIG.34b

Equal color difference contour

Iso-color difference contours ΔC from center outward: 2,4,6,8,10,12,14,16

## COMPENSATION OF BiNEM TRANSMISSIVE CELL WITH HOMEOTROPIC LC CELL

FIG.35

CONTRAST

FIG.36

**European Patent Office**

**EUROPEAN SEARCH REPORT**

Application Number

EP 05 29 0896

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 170 624 A (ROLIC AG) 9 January 2002 (2002-01-09) * paragraph [0036] - paragraph [0037] * * paragraph [0027] * * paragraph [0047] * * paragraph [0060] * * paragraph [0067] * | 1-41,43, 45-60 | G02F1/139 |
| Y | ----- | 42,44 | |
| Y | WANG BIN ET AL: "Design optimized bistable twisted nematic liquid crystal display" JOURNAL OF APPLIED PHYSICS, AMERICAN INSTITUTE OF PHYSICS. NEW YORK, US, vol. 90, no. 2, 15 July 2001 (2001-07-15), pages 552-555, XP012053808 ISSN: 0021-8979 * A. Switching d/p ratios versus equilibrium d/p ratio * * figures 1,2 * | 42,44 | |
| A | ----- WO 01/86345 A (NEMOPTIC; DOZOV, IVAN, N; MARTINOT-LAGARDE, PHILIPPE, R; STOENESCU, DA) 15 November 2001 (2001-11-15) * page 3, line 6 - page 4, line 3 * * figure 4 * | 1-60 | **TECHNICAL FIELDS SEARCHED** (Int.Cl.7) G02F |
| D,A | ----- JIN.XIN GUO ETAL.: "Retardation-film-compensated reflective bistable twisted nematic liquid-crystal displays" Applied Optics Opt. Soc. America USA, vol. 42, no. 19, 1 July 2003 (2003-07-01), pages 3853-3863, XP002346071 ISSN: 0003-6935 * the whole document * ----- -/-- | 1-60 | |

The present search report has been drawn up for all claims

| Place of search | Date of completion of the search | Examiner |
|---|---|---|
| Munich | 26 September 2005 | Girardin, F |

EPO FORM 1503 03.82 (P04C01)

**European Patent Office**

**EUROPEAN SEARCH REPORT**

Application Number

EP 05 29 0896

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | CHENG HONGFEI ET AL: "Optical properties of reflective bistable twisted nematic liquid crystal display" JOURNAL OF APPLIED PHYSICS, AMERICAN INSTITUTE OF PHYSICS. NEW YORK, US, vol. 87, no. 10, 15 May 2000 (2000-05-15), pages 7476-7480, XP012049112 ISSN: 0021-8979 * the whole document * | 1-60 | |

TECHNICAL FIELDS SEARCHED (Int.Cl.7)

The present search report has been drawn up for all claims

| Place of search | Date of completion of the search | Examiner |
|---|---|---|
| Munich | 26 September 2005 | Girardin, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 05 29 0896

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2005

| Patent document cited in search report | | Publication date | Patent family member(s) | | Publication date |
|---|---|---|---|---|---|
| EP 1170624 | A | 09-01-2002 | NONE | | |
| WO 0186345 | A | 15-11-2001 | AU | 6040101 A | 20-11-2001 |
| | | | CA | 2409708 A1 | 15-11-2001 |
| | | | CN | 1429352 A | 09-07-2003 |
| | | | EP | 1281104 A2 | 05-02-2003 |
| | | | FR | 2808890 A1 | 16-11-2001 |
| | | | JP | 2004518988 T | 24-06-2004 |
| | | | US | 2003128314 A1 | 10-07-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6327017 B
- US 6784955 B
- FR 0313991
- FR 0313992

- US 4239345 A
- US 5900852 A
- US 6707527 B

**Non-patent literature cited in the description**

- **LAZAREV et al.** *SID Digest of Technical Papers,* 1991, 571-3
- **HAN.** *Journal of the SID,* 1995, vol. 3 (1), 15
- **OHYAMA et al.** *SID Digest of Technical Papers,* 2004, 1106-1109

- *Mori IDW'96,* 1996, 189
- *Jpn. J. Appl. Phys.,* 1997, vol. 36, 143
- *Journal of Applied Optics,* vol. 88 (4), 1718
- **GUO.** *Applied Optics,* vol. 42 (19), 3853
- **OSTERMAN.** *IDW '02,* 2002, 101-103